# EUROPEAN PATENT APPLICATION

(11) **EP 4 726 603 A1**
(43) Date of publication of application: **15.04.2026**
(21) Application number: 25207006.5
(22) Date of filing: 06.10.2025
(51) Int. Cl.: G06N 3/008, G06F 3/04817, G06F 3/0482, G06F 3/0484

(54) **PROGRAM, DISPLAY CONTROL METHOD, AND DISPLAY SYSTEM**

(30) Priority: 09.10.2024 JP 2024177112
(71) Applicant: Casio Computer Co., Ltd., Tokyo 151-8543 (JP)
(72) Inventor: ITO, Naoki, Tokyo, 205-8555 (JP); ONODA, Kayoko, Tokyo, 205-8555 (JP); NISHIZAWA, Kanako, Tokyo, 205-8555 (JP); MATSUBARA, Kunihiro, Tokyo, 205-8555 (JP)
(74) Representative: Plougmann Vingtoft a/s

(57) **Abstract**

A program (231) causes a computer (21) to, based on history information (233) on a history of a state of an object (10), identify a change timing at which the state of the object (10) changed from a certain state to a predetermined state, and cause a display (24) to display a coordinate axis (431) that represents passage of time and an indicator (433) that is disposed at a position corresponding to the change timing on the coordinate axis (431) and indicates that the state of the object (10) changed to the predetermined state.

## Description

### TECHNICAL FIELD

The present disclosure relates to a program, a display control method, and a display system.

### DESCRIPTION OF RELATED ART

A robot capable of pseudo-communications with a user by making various actions in accordance with its state has been known. (See, for example, JP 2002-59389 A.)

However, the state of an object, such as a robot, is held as an internal parameter of the object, and therefore it is not always easy to accurately grasp the history of the state of the object from its appearance.

The present disclosure is for improving such circumstances and solving the problem, to be more specific, for making it possible to grasp the history of the state of an object easily.

### SUMMARY OF THE INVENTION

According to an aspect of the present disclosure, there is provided a program causing a computer to:
based on history information on a history of a state of an object, identify a change timing at which the state of the object changed from a certain state to a predetermined state; and
cause a display to display a coordinate axis that represents passage of time and an indicator that is disposed at a position corresponding to the change timing on the coordinate axis and indicates that the state of the object changed to the predetermined state.

### BRIEF DESCRIPTION OF DRAWINGS

FIG. 1 shows the configuration of a robot management system.
FIG. 2 schematically shows the configuration of a main part of a robot.
FIG. 3 is a block diagram showing a functional configuration of the robot.
FIG. 4 shows the contents of a log.
FIG. 5 shows an emotion map.
FIG. 6 is a block diagram showing a functional configuration of a smartphone.
FIG. 7 shows the contents of state information.
FIG. 8 shows a home screen.
FIG. 9 shows a detailed information screen.
FIG. 10 shows an interaction record screen.
FIG. 11 is a flowchart showing a control procedure of a pickup information display process.
FIG. 12A shows changes in emotion for which emotion icons are displayed.
FIG. 12B shows the emotion icons.
FIG. 13 is an illustration to explain a method of determining an emotion icon to be displayed.
FIG. 14 is a flowchart showing a control procedure of an emotion icon display process.
FIG. 15 is an illustration to explain display operation to display timeline information on a sleep state.
FIG. 16 is an illustration to explain the display operation to display timeline information on an unable-to-fall-asleep state.
FIG. 17 is a flowchart showing a control procedure of a timeline display process.
FIG. 18 shows the home screen with a rating screen displayed thereon.
FIG. 19 is a flowchart showing a control procedure of a rating screen display process.

### DETAILED DESCRIPTION

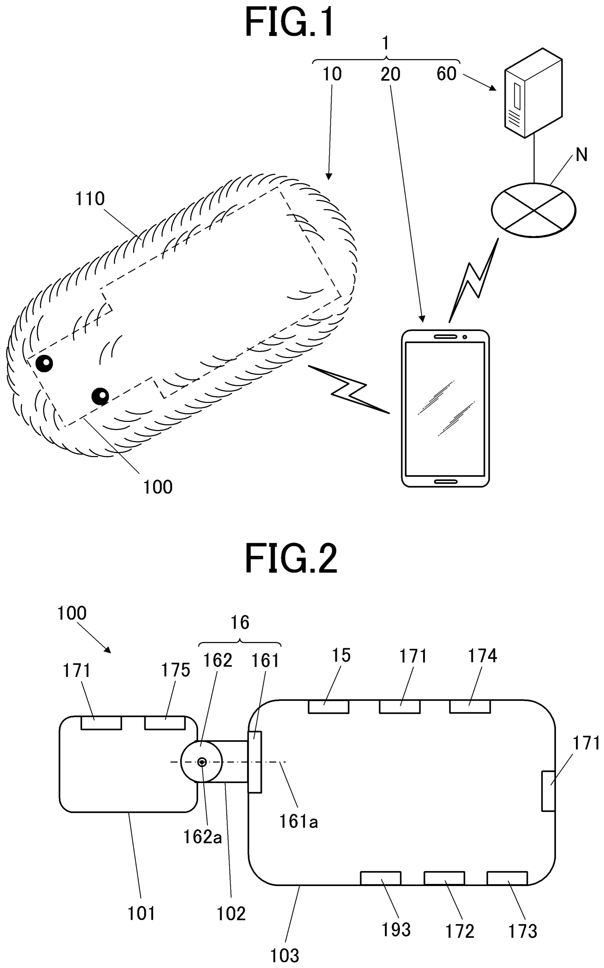

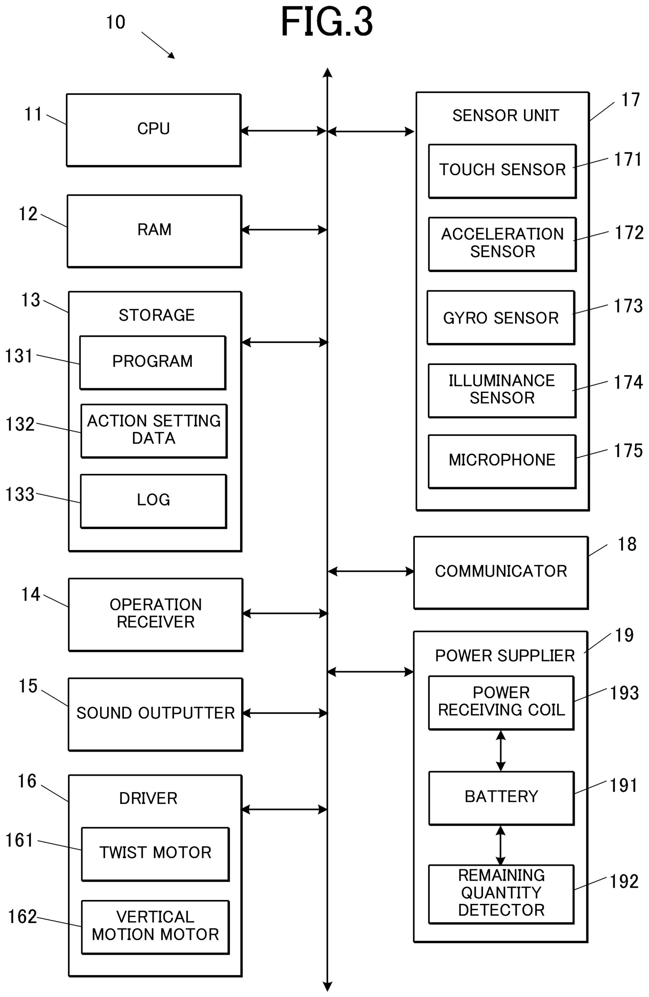

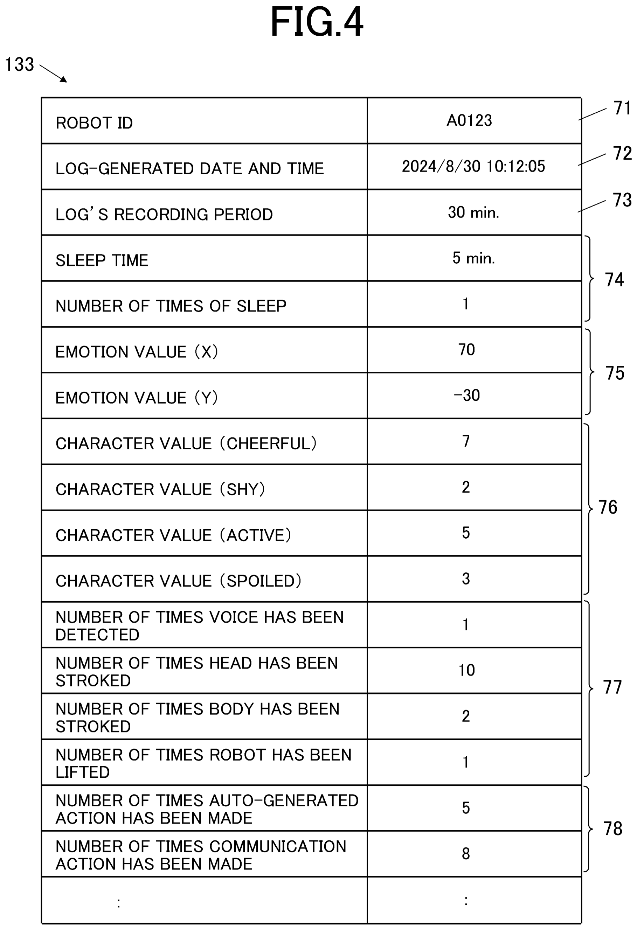

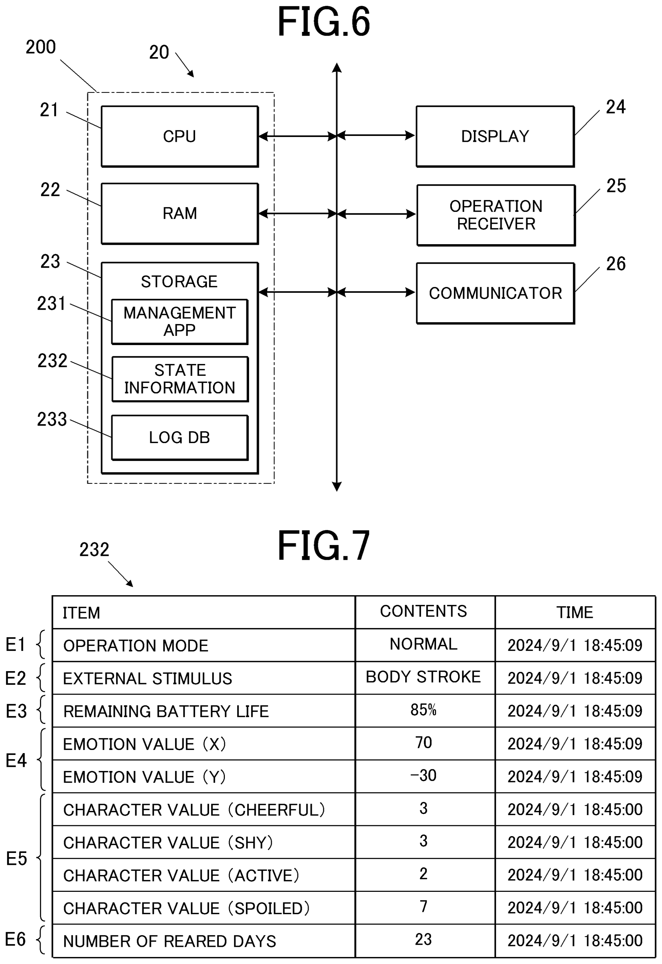

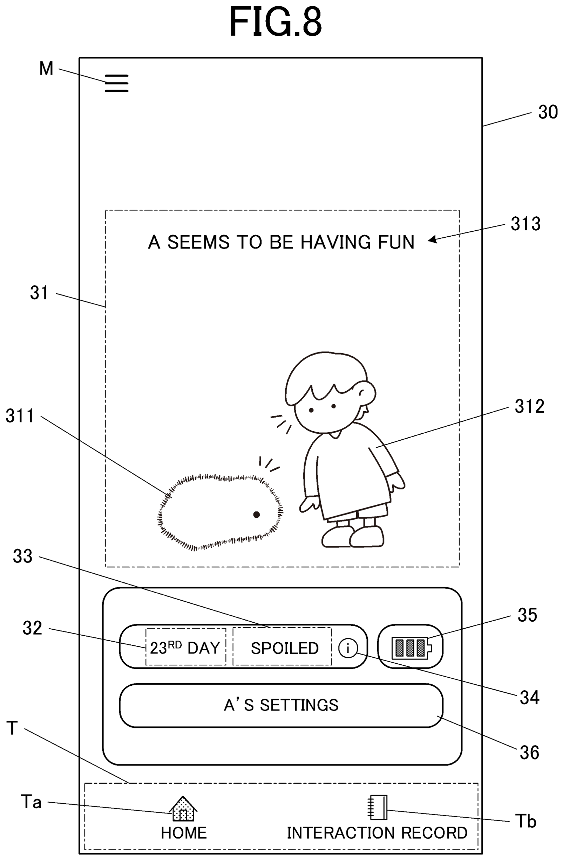

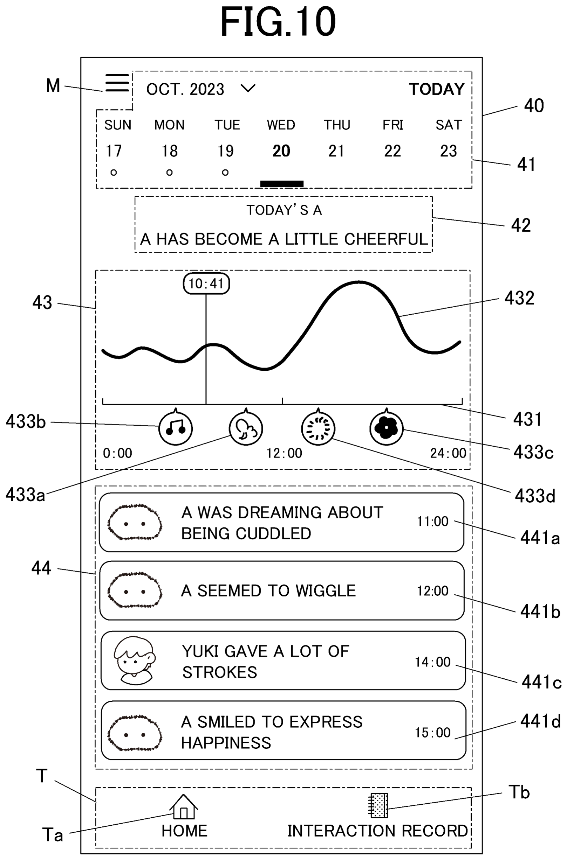

Hereinafter, one or more embodiments of the present disclosure will be described with reference to the drawings. As shown in FIG. 1, a robot management system 1 (display system) includes a robot 10 (object), a smartphone 20 (terminal device) and a server 60. The robot 10 includes a main part 100 and an exterior 110 that covers the entire surface of the main part 100. The robot 10 is a pet robot made to simulate a small living creature. The robot 10 can make actions different from one another imitating gestures of the living creature. The exterior 110 is made of a flexible material and deforms as the main part 100 moves. The exterior 110 includes a fur made of pile fabric and decorative members resembling eyes. The smartphone 20 is capable of communication connection with the robot 10 via short-range wireless communication. In this embodiment, Bluetooth^{®} Low Energy (BLE) is used for the short-range wireless communication. However, short-range wireless communication other than BLE may be used. The robot 10 and the smartphone 20 operate in cooperation with one another by transmitting and receiving data therebetween via BLE communication connection. For example, the smartphone 20 obtains, from the robot 10, state information 232 (shown in FIG. 6 and FIG. 7) on the latest state of the robot 10. On the basis of this state information 232, the smartphone 20 causes a display 24 to display a home screen 30 (shown in FIG. 8) containing various pieces of information on the state of the robot 10 on a management app 231 (program) (shown in FIG. 6) that is used for managing the robot 10 as the object. The smartphone 20 also obtains, from the robot 10, logs 133 (shown in FIG. 3 and FIG. 4) generated in the robot 10 and stores the logs 133 in a log database (DB) 233 (shown in FIG. 6). The logs 133 and the log DB 233 are each a form of history information on a history of the state of the robot 10. On the basis of the log DB 233, the smartphone 20 causes the display 24 to display an interaction record screen 40 (shown in FIG. 10) containing various pieces of information on the history of the state of the robot 10 on the management app 231. Two or more robots 10 may be associated with one smartphone 20. Instead of the smartphone 20, another type of device, such as a tablet terminal, a smartwatch, a laptop PC or a management server, may be used. The smartphone 20 is communicatively connected with the server 60 via a network N, such as the Internet. The smartphone 20 transfers the logs 133 obtained from the robot 10 to the server 60. The logs 133 accumulated in the server 60 are referenced, for example, as backups of the logs 133.

As shown in FIG. 2, the main part 100 of the robot 10 includes a head 101, a trunk (torso) 103, and a coupler 102 that couples the head 101 to the trunk 103. The main part 100 also includes a driver 16 that moves the head 101 with respect to the trunk 103. The driver 16 includes a twist motor 161 and a vertical motion motor 162. The twist motor 161 is a servo motor that rotates the head 101 and the coupler 102 within a predetermined angle range around a first rotation axis 161a extending in the extending direction of the coupler 102. The twist motor 161 operates to cause the robot 10 to turn the head 101. The vertical motion motor 162 is a servo motor that rotates the head 101 within a predetermined angle range around a second rotation axis 162a perpendicular to the first rotation axis 161a. The vertical motion motor 162 operates to cause the robot 10 to move the head 101 up and down. The direction of the up-and-down movement of the head 101 may be an inclined direction with respect to the vertical direction depending on the angle of the turn of the head 101 by the twist motor 161. Causing the twist motor 161 and/or the vertical motion motor 162 to operate frequently (rapidly) and/or cyclically can cause the robot 10 to shake the head 101 or quiver. Appropriately changing and combining timings, magnitudes and speeds of the operations of the twist motor 161 and the vertical motion motor 162 can cause the robot 10 to make various actions, such as a pleased (happy) action, a surprised action, and a breathing action imitating breathing of the living creature. Of these, the breathing action is a form of a spontaneous action that the robot 10 makes.

As shown in FIG. 2, the main part 100 also includes touch sensors 171, an acceleration sensor 172, a gyro sensor 173, an illuminance sensor 174, a microphone 175, a sound outputter 15, and a power receiving coil 193 for receiving power. The touch sensors 171 are disposed at the upper part of the head 101 and at the upper part and on the lateral surface of the trunk 103. The acceleration sensor 172, the gyro sensor 173 and the power receiving coil 193 are disposed on or near the lower surface of the trunk 103. The illuminance sensor 174 and the sound outputter 15 are disposed at the upper part of the trunk 103. The microphone 175 is disposed at the upper part of the head 101 near the base of the head 101.

As shown in FIG. 3, the robot 10 includes a central processing unit (CPU) 11, a random access memory (RAM) 12, a storage 13, an operation receiver 14, a sound outputter 15, which is mentioned above, a driver 16, which is mentioned above, a sensor unit 17, the components of which are mentioned above, a communicator 18, and a power supplier 19. These components of the robot 10 are connected with one another via a data transmission path, such as a bus. The functional components shown in FIG. 3 are disposed in the main part 100.

The CPU 11 is a processor that controls the operation of the robot 10 by reading and executing programs 131 stored in the storage 13 to perform various types of arithmetic processing. The robot 10 may have two or more processors (e.g., two or more CPUs), and multiple processes that are performed by the CPU 11 in this embodiment may be performed by the processors. In this case, the processors may be involved in the same processes or independently perform different processes in parallel. The RAM 12 provides the CPU 11 with a memory space for work and stores temporary data. The storage 13 is a non-transitory storage medium readable by the CPU 11 as a computer, and stores the programs 131 and various data. Thus, the storage 13 comprehends a computer program product storing the programs 131. The storage 13 includes a nonvolatile memory, such as a flash memory. The programs 131 are stored in the storage 13 in the form of computer-readable program codes. The programs 131 include firmware for controlling the hardware of the robot 10. The data stored in the storage 13 include action setting data 132 and logs 133 each including information on the history of the robot 10. In the action setting data 132, the contents of actions are set. Examples of the actions include a communication action that the robot 10 makes in accordance with, for example, the state of the robot 10 and/or the contents of an external stimulus, and an auto-generated action and the aforementioned breathing action that the robot 10 makes spontaneously regardless of external stimuli. The auto-generated action may be rephrased as a whimsical action because it looks like a gesture that the robot 10 makes whimsically. Settings pertaining to the contents of actions include settings of operation timings and operation amounts of the twist motor 161 and the vertical motion motor 162 of the driver 16, and settings of the pitch, length and volume of sound to be output by the sound outputter 15.

For each recording period of a predetermined length, a log 133 is generated by the CPU 11 and stored in the storage 13. Each log 133 includes information on the history of the robot 10 in its recording period. In this embodiment, the recording period is 30 minutes. However, if a special process that could prevent generation of logs 133 is performed at a generation timing of a log 133, which comes every 30 minutes, the log 133 is generated at a timing before the special process starts. In this case, the recording period becomes less than 30 minutes. As shown in FIG. 4, a log 133 generated by one time of log saving includes a robot ID 71, a log-generated date and time 72, a log's recording period 73 of the log 133, sleep information 74, an emotion parameter 75, a character parameter 76, stimulus count information 77, and action count information 78. The robot ID 71 is a unique code assigned to the robot 10. The log-generated date and time 72 is a date and time (hour, minute, second) when the log 133 was generated. The recording period 73 indicates the length of a period for which the history that is reflected in the log 133 has been recorded. As described above, the recording period 73 is normally 30 minutes, but could be less than 30 minutes. The sleep information 74 includes information on the length of time for which the robot 10 has been in a sleep mode in the recording period 73. The sleep mode is a mode of imitating sleep of the living creature. The sleep information 74 also includes information on the number of times the robot 10 has entered the sleep mode. The robot 10 holds a sleepiness parameter that represents sleepiness based on the surrounding environment (e.g., illuminance), the state of external stimuli, and/or the like. The robot 10 enters the sleep mode when the sleepiness parameter is equal to or more than a predetermined value.

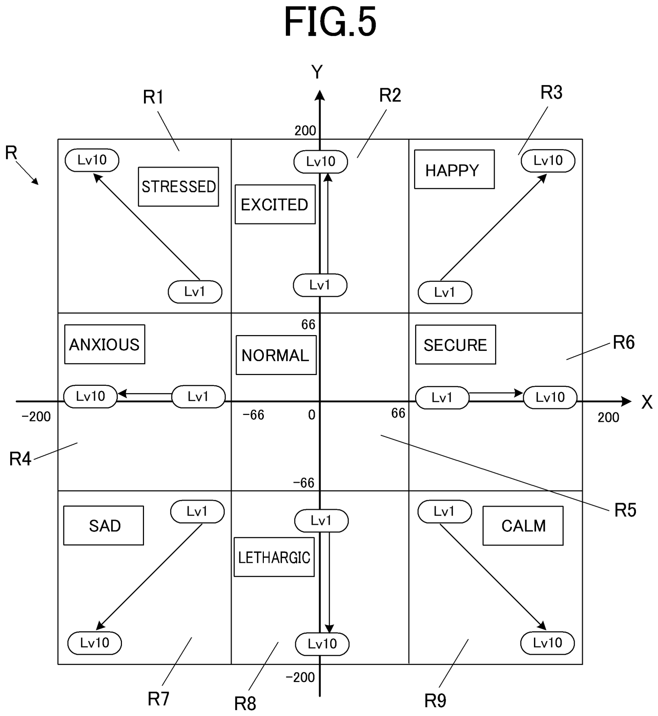

The emotion parameter 75 indicates a history of a pseudo-emotion of the robot 10. The emotion parameter 75 is composed of "Emotion Value (X)" and "Emotion Value (Y)", which hereinafter may be collectively referred to as "emotion values", indicating the pseudo-emotion of the robot 10 at a predetermined point in time during the recording period of the log 133 (e.g., at a point in time of the start of the recording period). The emotion values indicate the pseudo-emotion of the robot 10 using the position of a plotted point on an emotion map in XY plane shown in FIG. 5. The "Emotion Value (X)" indicates the position of a plotted point in X axis direction. The larger the value, the higher the degree of secureness, whereas the smaller the value, the higher the degree of anxiety. The "Emotion Value (Y)" indicates the position of the plotted point in Y axis direction. The larger the value, the higher the degree of excitement, whereas the smaller the value, the higher the degree of lethargy. The maximum value and the minimum value of the "Emotion Value (X)" are 200 and -200, respectively. The maximum value and the minimum value of the "Emotion Value (Y)" are 200 and -200, respectively. Thus, the emotion values are coordinates in a square emotion region R each side of which has a length of 400. The emotion region R of the emotion map is divided into regions R1 to R9 corresponding to emotions different from one another. The regions R1 to R9 are square regions arranged in a matrix of 3 × 3. The regions R1 to R9 each represent a certain emotion of the robot 10. The region R1 satisfying -200 ≤ X ≤ -67 and 67 ≤ Y ≤ 200 represents the emotion of "Stressed". The region R2 satisfying -66 ≤ X ≤ 66 and 67 ≤ Y ≤ 200 represents the emotion of "Excited". The region R3 satisfying 67 ≤ X ≤ 200 and 67 ≤ Y ≤ 200 represents the emotion of "Happy". The region R4 satisfying -200 ≤ X ≤ -67 and -66 ≤ Y ≤ 66 represents the emotion of "Anxious". The region R5 satisfying -66 ≤ X ≤ 66 and -66 ≤ Y ≤ 66 represents the emotion of "Normal". The region R6 satisfying 67 ≤ X ≤ 200 and -66 ≤ Y ≤ 66 represents the emotion of "Secure". The region R7 satisfying -200 ≤ X ≤ -67 and -200 ≤ Y ≤ -67 represents the emotion of "Sad". The region R8 satisfying -66 ≤ X ≤ 66 and -200 ≤ Y ≤ -67 represents the emotion of "Lethargic". The region R9 satisfying 67 ≤ X ≤ 200 and -200 ≤ Y ≤ -67 represents the emotion of "Calm". The regions R1 to R4 and R6 to R9, which correspond to not "Normal" but the other eight types of emotions, are each divided into ten level regions ("Lv1" to "Lv10") that represent ten levels (degrees) of an emotion. In each of the regions R1 to R4 and R6 to R9, the level regions are arranged such that a lower level region is arranged closer to the "Normal" region R5, and a higher level region is arranged farther from the "Normal" region R5. Hereinafter, the state of the emotion of the robot 10 may be expressed by a combination of the type of emotion and the level of the emotion, such as "Secure Lv10". Of the nine types of emotions, four types of emotions that are the emotions of "Excited", "Happy", "Secure" and "Calm" are positioned as positive emotions. The length of each side of the emotion region R and the respective regions R1 to R9 may increase within a certain range as the robot 10 grows. For example, the emotion region R may be initially -100 ≤ X ≤ 100 and -100 ≤ Y ≤ 100, and expand up to -200 ≤ X ≤ 200 and -200 ≤ Y ≤ 200 as the robot 10 grows. The emotion values change according to, for example, an external stimulus received by the robot 10. The change amount of the emotion values at a time is selected from variables DXP, DXM, DYP and DYM below.
DXP: Change Amount in +X Direction
DXM: Change Amount in -X Direction
DYP: Change Amount in +Y Direction
DYM: Change Amount in -Y Direction

It can also be said that the variable DXP represents the tendency of becoming secured, the variable DXM represents the tendency of becoming anxious, the variable DYP represents the tendency of becoming excited, and the variable DYM represents the tendency of becoming lethargic. In this embodiment, the initial values of the variables DXP, DXM, DYP and DYM are all "10". The variables DXP, DXM, DYP and DYM increase by a predetermined amount when the emotion values reach the maximum values (in terms of absolute values) in the +X axis direction, the -X axis direction, the +Y axis direction and the -Y axis direction, respectively. The maximum values of the variables DXP, DXM, DYP and DYM are all "20" in this embodiment.

The character parameter 76 shown in FIG. 4 indicates a history of a pseudo-character of the robot 10. The character parameter 76 represents the pseudo-character of the robot 10 at a predetermined point in time during the recording period of the log 133 (e.g., at a point in time of the start of the recording period). The character parameter 76 is composed of "Character Value (Cheerful)", "Character Value (Shy)", "Character Value (Active)" and "Character Value (Spoiled)", which hereinafter may be collectively referred to as "character values". The "Character Value (Cheerful)" is a value obtained by subtracting "10" from the variable DXP and indicates the tendency of change in the +X axis direction on the emotion map, namely, the tendency of becoming secured. The "Character Value (Shy)" is a value obtained by subtracting "10" from the variable DXM and indicates the tendency of change in the -X axis direction on the emotion map, namely, the tendency of becoming anxious. The "Character Value (Active)" is a value obtained by subtracting "10" from the variable DYP and indicates the tendency of change in the +Y axis direction on the emotion map, namely, the tendency of becoming excited. The "Character Value (Spoiled)" is a value obtained by subtracting "10" from the variable DYM and indicates the tendency of change in the -Y axis direction on the emotion map, namely, the tendency of becoming lethargic. The character values change as their corresponding variables DXP, DXM, DYP and DYM change. Their initial values and maximum values are all "0" and "10", respectively. Thus, the four character values indicate degrees of the four characters. The character corresponding to the largest character value among the four character values is regarded as the character of the robot 10 at the point in time. For example, in the example shown in FIG. 4, the "Character Value (Cheerful)" is "7". This is the largest character value among the four character values. Therefore, the character of the robot 10 at the point in time is regarded as "Cheerful". If two or more character values are the same and the largest among the four character values, one character is determined as the character of the robot 10 at the point in time in accordance with a predetermined priority order. In this embodiment, the priority order for the characters is, from the highest to the lowest, "Cheerful", "Active", "Shy" and then "Spoiled".

The stimulus count information 77 indicates the number of times the robot 10 has received each predetermined (type of) stimulus from the outside (external stimulus) during the log's recording period. The stimulus count information 77 shown in FIG. 4 includes, as examples, the number of times voice has been detected, the number of times the head of the robot 10 has been stroked, the number of times the body of the robot 10 has been stroked, and the number of times the robot 10 has been lifted. External stimuli are not limited thereto, but may include loud noise, the robot 10 being turned upside down, and the robot 10 being swung. External stimuli related to sound, such as voice and loud noise, are detected on the basis of detection data by the microphone 175. External stimuli related to touches, such as the body of the robot 10 being stroked and the head of the robot 10 being stroked, are detected on the basis of detection data by the touch sensors 171. External stimuli involving change in posture, such as the robot 10 being lifted, the robot 10 being turned upside down, and the robot 10 being swung, are detected on the basis of detection data by the acceleration sensor 172 and the gyro sensor 173. The action count information 78 indicates the number of times the robot 10 has made each predetermined (type of) action during the log's recording period. The action count information 78 shown in FIG. 4 includes, as examples, the number of times the auto-generated action has been made and the number of times the communication action has been made. The log 133 shown in FIG. 4 is an example and can be changed as appropriate. For example, the number of times of transition to a tame mode that the robot 10 has entered when attached to its user, the number of times the robot 10 has received a stimulus from the user in the tame mode, the number of times the robot 10 has made a predetermined action in the tame mode, and so forth may be recorded in the log 133.

Thus, the log 133 is not in a sequentially-recorded format in which states of the robot 10, actions of the robot 10, stimuli received by the robot 10 and so forth are recorded in chronological order, but in a format in which states of the robot 10, actions of the robot 10, stimuli received by the robot 10 and so forth during a certain log's recording period are summarized as and expressed with statistical values (number of times, frequency, length of time, etc.) and representative values (emotion values, character values, etc.) item by item. In other words, the log 133 is a package format in which records about the robot 10 during the log's recording period are summarized into and expressed with a predetermined number of items. This format can greatly reduce the data amount of logs 133 as compared to the sequentially-recorded format.

The operation receiver 14 shown in FIG. 3 includes operation buttons, operation knobs and so forth for turning on and off the power, adjusting the volume of sound to be output by the sound outputter 15, and so forth. The operation receiver 14 outputs pieces of operation information corresponding to input operations on the operation buttons, the operation knobs and so forth to the CPU 11. The sound outputter 15 includes a speaker, and outputs sound with a pitch, a length and a volume in accordance with a control signal and sound data transmitted from the CPU 11. The sound may be a sound imitating a cry of the living creature. The driver 16 causes the above-described twist motor 161 and vertical motion motor 162 to operate in accordance with a control signal transmitted from the CPU 11.

The sensor unit 17 includes the above-described touch sensors 171, acceleration sensor 172, gyro sensor 173, illuminance sensor 174 and microphone 175, and outputs detection results by these sensors and the microphone 175 to the CPU 11. The touch sensors 171 detect touches on the robot 10 by the user or other material objects. Examples of the touch sensors 171 include a pressure sensor and a capacitance sensor, and output detection data on presence/absence of touches on the robot 10 to the CPU 11. The acceleration sensor 172 detects acceleration in each of directions of three axes perpendicular to one another and outputs the detection data to the CPU 11. The gyro sensor 173 detects angular velocity around each of the directions of three axes perpendicular to one another and outputs the detection data to the CPU 11. The illuminance sensor 174 detects brightness around the robot 10 and outputs the detection data to the CPU 11. The microphone 175 detects sound around the robot 10 and outputs data on the detected sound to the CPU 11.

The communicator 18 is a communication module including an antenna, a modulation-and-demodulation circuit and a signal processing circuit, and performs wireless data communication with the smartphone 20 in accordance with the BLE communication standard. The power supplier 19 includes a battery 191, a remaining quantity detector 192, and a power receiving coil 193, which is mentioned above. The battery 191 supplies electric power to the components of the robot 10. The battery 191 of this embodiment is a secondary cell that can be repeatedly charged by a contactless charging method. The remaining quantity detector 192 detects the remaining life of the battery 191 in accordance with a control signal transmitted from the CPU 11 and outputs the detection result to the CPU 11. The battery 191 is charged in a state in which the robot 10 is stored (set) in a not-shown dedicated power feeder (storage or charging dock). The power feeder includes a power transmitting coil for charging the battery 191 by electromagnetic induction. The power transmitting coil is disposed to face the power receiving coil 193 in the state in which the robot 10 is stored in the power feeder.

As shown in FIG. 6, the smartphone 20 includes a CPU 21, a RAM 22, a storage 23, a display 24, an operation receiver 25, and a communicator 26. These components of the smartphone 20 are connected with one another via a data transmission path, such as a bus. The CPU 21, the RAM 22 and the storage 23 constitute a display controller 200 that controls the display operation of the display 24.

The CPU 21 is a processor that controls the operation of the smartphone 20 by reading and executing programs that include a management app 231 and are stored in the storage 23 to perform various types of arithmetic processing. The CPU 21 is an example of one or more processers. The smartphone 20 may have two or more processors (e.g., two or more CPUs), and multiple processes that are performed by the CPU 21 in this embodiment may be performed by the processors. In this case, the processors constitute the aforementioned one or more processers. In this case, the processors may be involved in the same processes or independently perform different processes in parallel. The RAM 22 provides the CPU 21 with a memory space for work and stores temporary data. The storage 23 is a non-transitory storage medium readable by the CPU 21 as a computer, and stores the programs, such as the management app 231, and various data. Thus, the storage 23 comprehends a computer program product storing the programs. Management of the robot 10 with the management app 231 includes, at least, causing a predetermined display to display information on the state of the robot 10. The storage 23 includes a nonvolatile memory, such as a flash memory. The data stored in the storage 23 include the aforementioned state information 232 and log DB 233 (history information).

As shown in FIG. 7, the state information 232 includes data on each of elements E1 to E6 that indicate the latest state of the robot 10. To be more specific, the state information 232 includes data indicating the contents of each of the elements E1 to E6 and information on the time at which each data was generated in the robot 10 (or time when each data was received by the smartphone 20). The element E1 is an operation mode of the robot 10. The operation mode of the robot 10 includes a normal mode, a deep sleep mode, and the aforementioned sleep mode. The normal mode is a mode in which the robot 10 makes a communicative action in response to an external stimulus or makes an auto-generated action when a predetermined condition is satisfied. The deep sleep mode is a mode in which movement of the head 101 of the robot 10 and sound output from the sound outputter 15 are stopped. The deep sleep mode is executed when an operation as an instruction to shift to the deep sleep mode is made on a not-shown setting screen. The element E2 is an external stimulus and indicates the type of stimulus received by the robot 10 from the outside. The element E3 is the remaining life of the battery 191. The remaining battery life is expressed in percentage with a full charge as 100%. The remaining battery life is detected by the remaining quantity detector 192. The element E4 is the latest emotion values of the robot 10. The element E5 is the latest character values of the robot 10. The element E6 is the number of reared days and indicates the number of days (cumulative operation period) starting from the day on which the robot 10 was first started. Among the elements E1 to E6, the elements E1, E2, E4, E5 and E6 are each a form of an element (information) that is updated according to the history of the robot 10.

The data on each of the elements E1 to E6 is generated by the CPU 11 of the robot 10 according to the operation state of the robot 10, and stored in the storage 13 of the robot 10 together with its generated time. While the CPU 21 of the smartphone 20 is in BLE communication connection with the robot 10, the CPU 21 repeatedly obtains the data on the elements E1 to E6 from the robot 10 at predetermined frequencies to update the state information 232. To be more specific, as to the data on each of the elements E1 to E4, the CPU 21 obtains the data from the robot 10 at a frequency of once per second to update the state information 232, and as to the data on each of the elements E5 and E6, the CPU 21 obtains the data from the robot 10 at a frequency of once per minute to update the state information 232. Updating the state information 232 corresponds to obtaining the state information 232. The format of the state information 232 is not limited to the one shown in FIG. 6. For example, the state information 232 may be in a queue format in which elements E obtained from the robot 10 are accumulated in chronological order.

In the log DB 233 shown in FIG. 6, logs 133 obtained from the robot 10 are accumulated. While the robot 10 is in BLE communication connection with the smartphone 20, a log 133 generated in the robot 10 every 30 minutes is transmitted to the smartphone 20 as it is generated. Apart from this, when the user makes an operation as an instruction to obtain a log 133 on the management app 231, the CPU 21 of the smartphone 20 transmits a request to the robot 10 to transfer the log 133, and obtains the log 133 from the robot 10. The CPU 21 transfers the log 133 obtained from the robot 10 to the server 60. Therefore, in the server 60, data the contents of which are the same as those of the log DB 233, which may be hereinafter referred to as backup logs, are stored. At a predetermined timing, the CPU 21 determines whether the log DB 233 stored in the storage 23 and the backup logs stored in the server 60 match, and if the CPU 21 determines that they do not match, the CPU 21 obtains the backup logs from the server 60, and corrects the contents of the log DB 233. The predetermined timing may be a timing of updating representations on (displayed contents of) the home screen 30 and the interaction record screen 40, which will be described later.

The display 24 includes a display panel, such as a liquid crystal panel capable of dot-matrix display, and a driving circuit for the display panel. The display 24 displays various menus/items, screens of the management app 231 and so forth in accordance with control signals transmitted from the CPU 21. The operation receiver 25 includes an operation means, such as a touch panel and/or operation buttons, on the display panel of the display 24, and outputs operation signals corresponding to operations on the operation means to the CPU 21. The communicator 26 is a communication module including an antenna, a modulation-and-demodulation circuit and a signal processing circuit, and performs wireless data communication with the robot 10 in accordance with the BLE communication standard. The communicator 26 transmits and receives voice data in telephone communication, packet data for the Internet connection and so forth to and from a base station.

Next, the operation of the robot management system 1 will be described. When the user makes an operation on the operation receiver 25 of the smartphone 20 as an instruction to start the management app 231, the CPU 21 executes and starts the management app 231. The display operation of the display 24 described below is controlled by the CPU 21 executing predetermined processes in accordance with the management app 231. When the CPU 21 starts the management app 231, the CPU 21 obtains data on each element of the state information 232 from the robot 10 and causes the display 24 to display the home screen 30 shown in FIG. 8 on the basis of this state information 232. Before the home screen 30, a predetermined splash screen or welcome screen may be displayed. The CPU 21 obtains the data on the elements E1 to E6 from the robot 10 at the aforementioned frequencies to update the state information 232, and updates the home screen 30 on the basis of the latest state information 232. On the home screen 30, a state image 31, a number-of-growth-days image 32, a character image 33, an information mark 34, a remaining battery life image 35, a setting button 36, a menu mark M and a tab bar T are displayed in a predetermined arrangement. The letter "A" in FIG. 8 is a name given by the user to the robot 10 on the management app 231. The state image 31, the number-of-growth-days image 32, the character image 33 and the remaining battery life image 35 show the state of the robot 10. Thus, the home screen 30 contains various pieces of information on the state of the robot 10. By looking at the home screen 30, the user can learn about the real-time state of the robot 10.

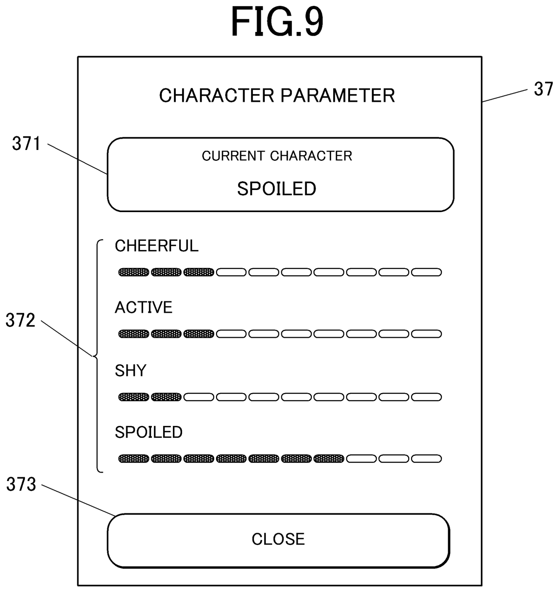

The state image 31 is displayed at approximately the center of the home screen 30. The state image 31 includes an animated video that shows the state of the robot 10 plainly. To be more specific, the state image 31 includes an appearance image 311 showing a certain element of the state of the robot 10 by the appearance of the robot 10. The appearance image 311 reflects the actual appearance of the robot 10, for example, the color of the exterior 110. The state image 31 also includes an avatar image 312 showing the appearance of an avatar of the user. The appearance image 311 and the avatar image 312 are of the animated video of a predetermined length. The state image 31 also includes a text 313 showing a certain element of the state of the robot 10. The text 313 is displayed, for example, above the appearance image 311 and the avatar image 312. The certain elements of the state of the robot 10 shown by the state image 31 include one or more of the following: whether the power of the robot 10 is on, whether the robot 10 and the smartphone 20 are in communication connection with one another, whether the robot 10 is operating in a function-suppressed mode (deep sleep mode or sleep mode), whether the robot 10 has received a predetermined stimulus from the outside, the pseudo-emotion of the robot 10, and the pseudo-character of the robot 10. Under the state image 31 on the home screen 30, the number-of-growth-days image 32, the character image 33, the information mark 34, the remaining battery life image 35 and the setting button 36 are displayed in a predetermined arrangement. The numerical value of the number of growth days included in the number-of-growth-days image 32 is determined on the basis of the element E6 of the state information 232. The character image 33 shows the character corresponding to the largest character value among the four character values of the element E5 of the state information 232. The information mark 34 is a mark of the letter "i" in a circle. When an operation to select the information mark 34 is made, the CPU 21 causes the display 24 to display a detailed information screen 37 shown in FIG. 9. The detailed information screen 37 contains detailed information on the character of the robot 10. On the detailed information screen 37, a character 371 of the robot 10 at the point in time, a graph 372 showing the character values of the four characters at eleven levels of "0" to "10", and a button 373 for closing the detailed information screen 37 are displayed. The remaining battery life image 35 shown in FIG. 8 is an image showing the remaining life of the battery 191 at three levels. When an operation to select the setting button 36 is made, the CPU 21 causes the display 24 to display a not-shown setting screen for operation settings of the robot 10. On the setting screen, the following can be performed: adjusting the volume of sound (cry) to be output from the sound outputter 15 of the robot 10, setting the robot 10 to shift to the deep sleep mode, updating the firmware of the robot 10, and so forth. The menu mark M is displayed at the upper left corner of the home screen 30. When an operation to select the menu mark M is made, the CPU 21 causes the display 24 to display a not-shown menu screen. From the menu screen, the following screens can be displayed: a screen for editing the user's profile, a screen where a list of associated robots 10 is displayed, a screen for registering (associating) new robots 10, a screen where information on the version and so forth of the management app 231 is displayed, and so forth. At the bottom of the home screen 30, the tab bar T is displayed. In the tab bar T, a home icon Ta for displaying the home screen 30 and an interaction record icon Tb for displaying the interaction record screen 40 are displayed. When the interaction record icon Tb is selected with the home screen 30 displayed, the CPU 21 causes the display 24 to transition from the home screen 30 to the interaction record screen 40 shown in FIG. 10.

On the interaction record screen 40, various pieces of information on a history of interactions between the robot 10 and the user are displayed. The interaction record screen 40 includes a date selection section 41, pickup information 42 (change information), a graph region 43, a timeline 44, a menu mark M and a tab bar T. The function of the menu mark M is the same as that of the menu mark M on the home screen 30 shown in FIG. 8. The configuration of the tab bar T is the same as that of the tab bar T on the home screen 30 shown in FIG. 8. When the home icon Ta in the tab bar T on the interaction record screen 40 is selected, the CPU 21 causes the display 24 to transition from the interaction record screen 40 to the home screen 30. The date selection section 41 includes a group of icons for selecting a date. When the user selects a certain date in the date selection section 41, the CPU 21 causes the display 24 to display the information on the history of interactions for the selected date on the interaction record screen 40. The date selection section 41 shown in FIG. 10 includes icons for selecting a year and a month, icons for selecting a day of the week and a date, and an icon for selecting today (that day).

The pickup information 42 indicates a characteristic (remarkable) change that occurred in the robot 10 during the most recent certain period. In this embodiment, the certain period is one day (24 hours) of the previous day (the day before). On the basis of the latest log DB 233, the CPU 21 determines whether a change that satisfies a predetermined change condition (predetermined condition) occurred in the state of the robot 10 on the previous day, and if the CPU 21 determines that the change that satisfies the change condition occurred on the previous day, the CPU 21 causes the display 24 to display the pickup information 42 as change information indicating that the change occurred on the previous day. The pickup information 42 indicates the change in the emotion or the character of the robot 10. The emotion and the character of the robot 10 are both the state of the robot 10.

If the emotion parameter 75 of two or more logs 133 recorded in the log DB 233 on the previous day shows a change that satisfies the change condition, the CPU 21 causes the display 24 to display the pickup information 42 indicating the change in the emotion on the previous day. To be more specific, if the CPU 21 determines that the level of the emotion parameter 75 representing one of the positive emotions ("Excited", "Happy", "Secure" and "Calm") increased by a reference width or more (three levels or more in this embodiment) on the previous day, the CPU 21 determines that the change condition is satisfied. For example, if the difference between the lowest level and the highest level of one of the positive emotions on the previous day is equal to or more than the reference width, and the timing of the highest level is later than the timing of the lowest level, the CPU 21 determines that the change condition is satisfied. Alternatively, the CPU 21 may determine that the change condition is satisfied if the level of one of the positive emotions at the end of the previous day is higher than the level thereof at the start of the previous day by the reference width or more. The CPU 21 then causes the display 24 to display the pickup information 42 indicating the change on the previous day in the emotion having the level increased by the reference width or more (three levels or more in this embodiment). For example, if the CPU 21 determines that the emotion of "Happy" increased by three levels or more on the previous day, the CPU 21 causes the display 24 to display the pickup information 42 the contents of which are "A has had a happy moment". If the CPU 21 determines that two or more emotions increased by the same width, namely, by the same levels, the CPU 21 randomly selects one emotion from these two or more emotions to cause the display 24 to display the pickup information 42. Each emotion is, in advance, associated and stored in the storage 13 with multiple pieces of the pickup information 42 different from one another. If the same emotion is selected as the display target for the pickup information 42 for two consecutive days or more, the CPU 21 changes the contents of the pickup information 42 so that the same contents of the pickup information 42 are not displayed for two consecutive days.

If the character parameter 76 of two or more logs 133 recorded in the log DB 233 on the previous day shows a change that satisfies the change condition, the CPU 21 causes the display 24 to display the pickup information 42 indicating the change in the character on the previous day. To be more specific, if the CPU 21 determines that one of the four character values of the character parameter 76 increased by a reference value or more (three or more in this embodiment) on the previous day, the CPU 21 determines that the change condition is satisfied. For example, if the difference between the smallest value and the largest value of one of the four character values on the previous day is equal to or more than the reference value, and the timing of the largest value is later than the timing of the smallest value, the CPU 21 determines that the change condition is satisfied. Alternatively, the CPU 21 may determine that the change condition is satisfied if the character value of one of the four character values at the end of the previous day is larger than the character value thereof at the start of the previous day by the reference value or more. The CPU 21 then causes the display 24 to display the pickup information 42 indicating the change on the previous day in the character corresponding to the character value that increased by the reference value or more (three or more in this embodiment). For example, if the CPU 21 determines that the "Character Value (Cheerful)" increased by three or more on the previous day, the CPU 21 causes the display 24 to display the pickup information 42 the contents of which are "A has become a little cheerful" as shown in FIG. 10. If the CPU 21 determines that the character values of two or more characters increased by the same width, namely, by the same values, the CPU 21 randomly selects one character from these two or more characters to cause the display 24 to display the pickup information 42. Each character is, in advance, associated and stored in the storage 13 with multiple pieces of the pickup information 42 different from one another. If the same character is selected as the display target for the pickup information 42 for two consecutive days or more, the CPU 21 changes the contents of the pickup information 42 so that the same contents of the pickup information 42 are not displayed for two consecutive days.

If there is an emotion that increased by three levels or more on the previous day and also there is a character the character value of which increased by three or more on the previous day, the CPU 21 gives priority to the emotion and causes the display 24 to display the pickup information 42 on the emotion. Alternatively, the CPU 21 may give priority to the character and causes the display 24 to display the pickup information 42 on the character. If there is no emotion that increased by three levels or more on the previous day and also there is no character the character value of which increased by three or more on the previous day, the CPU 21 causes the display 24 to display the pickup information 42 on an emotion or a character whichever the increase is larger if there is any emotion or character the level or character value of which increased. If their increases are the same, the CPU 21 gives priority to the emotion. If the total of the recording periods of logs 133 on the previous day is less than a predetermined lower limit time (e.g., less than one hour), or if logs 133 on the previous day show no change in either the emotion or the character of the robot 10, the CPU 21 causes the display 24 to display the pickup information 42 indicating that there is nothing noteworthy.

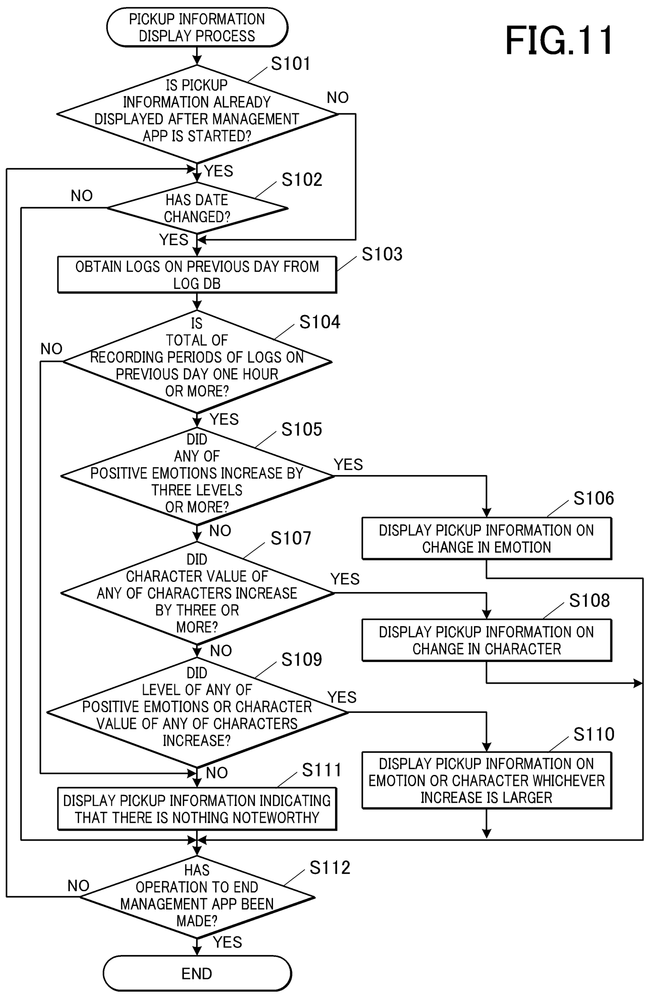

Next, a pickup information display process that is performed by the CPU 21 for displaying the pickup information 42 will be described with reference to FIG. 11. The pickup information display process is started in the case where the interaction record screen 40 is displayed after the management app 231 is started. When the pickup information display process is started, the CPU 21 determines whether the pickup information 42 is already displayed after the management app 231 is started (Step S101). If the CPU 21 determines that the pickup information 42 is already displayed (Step S101; YES), the CPU 21 determines whether the date has changed (Step S102). If the CPU 21 determines that the date has changed (Step S102; YES) or determines that the pickup information 42 is not displayed yet after the management app 231 is started (Step S101; NO), the CPU 21 obtains logs 133 on the previous day from the log DB 233 (Step S103). The CPU 21 determines whether the total of the recording periods of the logs 133 on the previous day is one hour or more (Step S104). If the CPU 21 determines that the total of the recording periods of the logs 133 on the previous day is one hour or more (Step S104; YES), the CPU 21 determines whether any of the positive emotions increased by three levels or more during the entire recording period (total of the recording periods) of the logs 133 on the previous day (Step S105). In this embodiment, if the difference between the lowest level and the highest level of one of the positive emotions on the previous day is three levels or more, and the timing of the highest level is later than the timing of the lowest level, the CPU 21 determines that the one of the positive emotions increased by three levels or more on the previous day. If the CPU 21 determines that one of the positive emotions increased by three levels or more on the previous day (Step S105; YES), the CPU 21 causes the display 24 to display the pickup information 42 on the change in the emotion (Step S106). If the CPU 21 determines that none of the positive emotions increased by three levels or more on the previous day (Step S105; NO), the CPU 21 determines whether the character value of any of the characters increased by three or more during the entire recording period of the logs 133 on the previous day (Step S107). In this embodiment, if the difference between the smallest value and the largest value of the character value of one of the characters on the previous day is three or more, and the timing of the largest value is later than the timing of the smallest value, the CPU 21 determines that the character value of the one of the characters increased by three or more on the previous day. If the CPU 21 determines that the character value of one of the characters increased by three or more on the previous day (Step S107; YES), the CPU 21 causes the display 24 to display the pickup information 42 on the change in the character (Step S108). If the CPU 21 determines that the character value of none of the characters increased by three or more on the previous day (Step S107; NO), the CPU 21 determines whether the level of any of the emotions or the character value of any of the characters increased during the entire recording period of the logs 133 on the previous day (Step S109). If the CPU 21 determines that the level of one of the emotions and/or the character value of one of the characters increased on the previous day (Step S109; YES), the CPU 21 causes the display 24 to display the pickup information 42 on the emotion or the character whichever the increase is larger (Step S110). If the CPU 21 determines that neither the level of any of the emotions nor the character value of any of the characters increased (Step S109; NO), or determines in Step S104 that the total of the recording periods of the logs 133 on the previous day is less than one hour (Step S104; NO), the CPU 21 causes the display 24 to display the pickup information 42 indicating that there is nothing noteworthy (Step S111). After Step S106, Step S108, Step S110 or Step S111, or if the CPU 21 determines in Step S102 that the date has not changed (Step S102; NO), the CPU 21 determines whether a user operation to end the management app 231 has been made (Step S112). If the CPU 21 determines that no user operation to end the management app 231 has been made (Step S112; NO), the CPU 21 returns the process to Step S102. If the CPU 21 determines that a user operation to end the management app 231 has been made (Step S112; YES), the CPU 21 ends the pickup information display process.

In the graph region 43 on the interaction record screen 40 shown in FIG. 10, a coordinate axis 431 representing passage of time, a graph 432 showing transition of the emotion of the robot 10 in one day and an emotion icon(s) 433 (indicator) are displayed. A value at each point in time in the graph 432 is, if the signs of the "Emotion Value (X)" and the "Emotion Value (Y)" of the emotion parameter 75 in each log 133 in the log DB 233 are the same, the sum of the values, whereas if the signs thereof are different, the larger value between the values. In the log DB 233, the emotion values of the emotion parameter 75 are recorded at a timing (point in time) during the recording period of each log 133. The graph 432 is shaped by connecting and smoothing discrete values recorded at the timings.

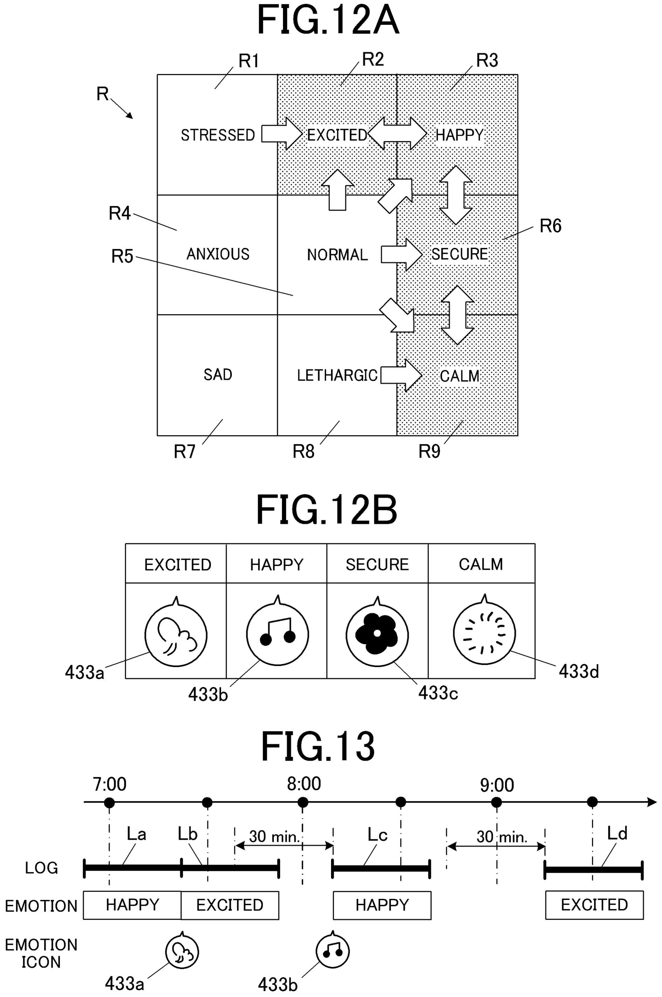

The emotion icon 433 is an indicator indicating that the emotion of the robot 10 has changed from an emotion (certain state or certain emotion) to one of the positive emotions (predetermined state or predetermined emotion). The emotion icon 433 is displayed, on the coordinate axis 431, at a position corresponding to a change timing at which the emotion of the robot 10 changed from an emotion (certain emotion) to one of the positive emotions. As indicated by arrows in FIG. 12A, the change timing is a timing at which the emotion of the robot 10 changed from a certain emotion to one of the emotions of "Excited", "Happy", "Secure" and "Calm". To be more specific, the change timing is a timing at which the emotion values of the emotion parameter 75 changed from coordinates in one of the regions R1 to R9 of the emotion map to coordinates in one of the regions R2, R3, R6 and R9, which correspond to the emotions of "Excited", "Happy", "Secure" and "Calm", respectively. A timing at which the emotion of the robot 10 changed from a positive emotion to another positive emotion is also identified as the change timing. In the graph region 43, the emotion icon 433 after the change is displayed at the position corresponding to the change timing. Examples of the emotion icon 433 corresponding to the positive emotions are shown in FIG. 12B. The emotion icon 433 is displayed only when the level of the emotion after the change is equal to or higher than a predetermined reference (Level 7 or higher in this embodiment). In the example shown in FIG. 10, an emotion icon 433a representing the emotion of "Excited", an emotion icon 433b representing the emotion of "Happy", an emotion icon 433c representing the emotion of "Secure" and an emotion icon 433d representing the emotion of "Calm" are displayed.

A method of determining the emotion icon 433 to be displayed will be described with reference to FIG. 13 with a specific example. FIG. 13 shows the recording periods (La to Ld) of four logs 133 and the emotion corresponding to the emotion parameter 75 in each of the logs 133. Hereinafter, for convenience, a log 133 whose recording period is "Lx" is referred to as "log Lx". In FIG. 13, logs La and Lb are consecutive, and the emotion of "Happy" in the log La has changed to the emotion of "Excited" in the log Lb. Therefore, if the emotion of "Excited" in the log Lb is at Level 7 or higher, the start timing of the log Lb is determined as the change timing. The emotion icon 433a representing "Excited" is displayed at the position corresponding to the start timing of the log Lb accordingly. In the case where the emotion icon 433 is determined on the basis of the log La and the log Lb, the recording period of the log La corresponds to a first period, the log La corresponds to first history information, the recording period of the log Lb corresponds to a second period, and the log Lb corresponds to second history information. Assume that a log Lc next to (after) the log Lb is a log in which the emotion of "Happy" is at Leve 7 or higher. In this case, since the emotion has changed to "Happy" in the log Lc from "Excited", and the emotion after the change is a positive emotion and at Level 7 or higher, the start timing of the log Lc is determined as the change timing. Therefore, the emotion icon 433b representing "Happy" is displayed at the position corresponding to the change timing. In the case where the emotion icon 433 is determined on the basis of the log Lb and the log Lc, the recording period of the log Lb corresponds to the first period, the log Lb corresponds to the first history information, the recording period of the log Lc corresponds to the second period, and the log Lc corresponds to the second history information. In the case where an interval is present between the recording period of a log Ly and the recording period of the next log Lz, if the interval between the end of the log Ly and the start of the log Lz is within a predetermined time (within 30 minutes in this embodiment), the start timing of the log Lz is determined as the change timing, namely, the emotion icon 433 is displayed at the start timing of the log Lz. In the example shown in FIG. 13, the interval between the end of the log Lb and the start of the log Lc is within 30 minutes. Therefore, the emotion icon 433b is displayed at the position corresponding to the start timing of the log Lc. Meanwhile, the interval between the end of the log Lc and the start of the next log Ld is more than 30 minutes. Therefore, no emotion icon 433 is displayed at the position corresponding to the start timing of the log Ld even if the display condition for the emotion icon 433 that is different from the emotion icon 433b displayed at the position corresponding to the start timing of the log Lc is satisfied.

The emotion icon 433 may be displayed regardless of the level of the emotion after the change. Further, the emotion icon 433 may be displayed not only at the change timing to one of the positive emotions but also at the change timing to any emotion. Still further, instead of the emotion icon 433, an indicator indicating that another type (e.g., character, operation mode, etc.) of the state of the robot 10 has changed from a certain state to a predetermined state may be displayed in the graph region 43.

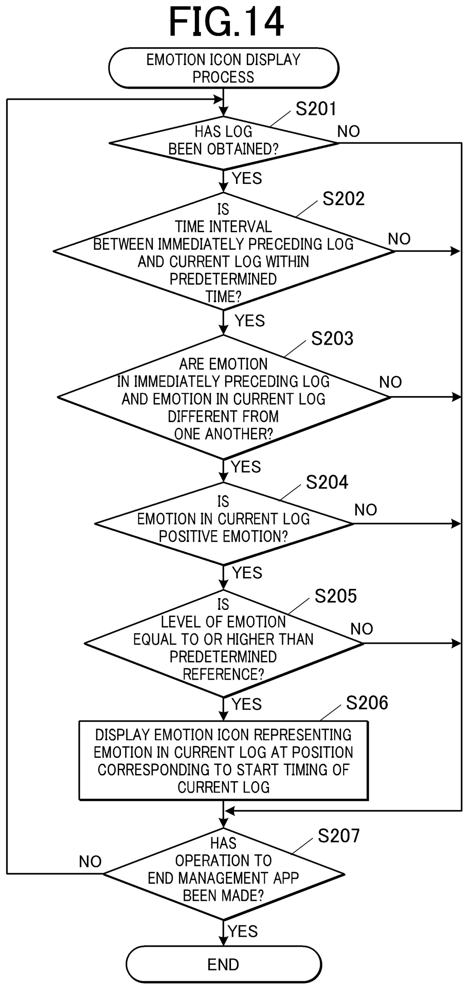

Next, an emotion icon display process that is performed by the CPU 21 for displaying the emotion icon 433 will be described with reference to FIG. 14. The emotion icon display process is started in the case where the interaction record screen 40 is displayed after the management app 231 is started. When the emotion icon display process is started, the CPU 21 determines whether a new log 133 has been obtained from the robot 10 (Step S201). If the CPU 21 determines that a new log 133 has been obtained (Step S201; YES), the CPU 21 determines whether the time interval between the immediately preceding log 133 and the obtained log 133 is within a predetermined time (within 30 minutes in this embodiment), namely, whether the interval between the end of the immediately preceding log 133 and the start of the obtained log 133 is within a predetermined time (Step S202). If the CPU 21 determines that the time interval between the immediately preceding log 133 and the obtained log 133 is within the predetermined time (Step S202; YES), the CPU 21 determines whether the emotion corresponding to the emotion parameter 75 in the immediately preceding log 133 and the emotion corresponding to the emotion parameter 75 in the newly-obtained current log 133 are different from one another (Step S203). If the CPU 21 determines that the emotion in the immediately preceding log 133 and the emotion in the current log 133 are different from one another (Step S203; YES), the CPU 21 determines whether the emotion in the current log 133 is a positive emotion (Step S204). If the CPU 21 determines that the emotion in the current log 133 is a positive emotion (Step S204; YES), the CPU 21 determines whether the level of the emotion in the current log 133 is equal to or higher than a predetermined reference (Level 7 or higher in this embodiment) (Step S205). If the CPU 21 determines that the level of the emotion is equal to or higher than the predetermined reference (Step S205; YES), the CPU 21 determines the start timing of the current log 133 as the change timing and causes the display 24 to display the emotion icon 433 representing the emotion in the current log 133 at the position corresponding to the change timing in the graph region 43 (Step S206). After Step S206, or if the determination made in any of Steps S201 to S205 is "NO", the CPU 21 determines whether a user operation to end the management app 231 has been made (Step S207). If the CPU 21 determines that no user operation to end the management app 231 has been made (Step S207; NO), the CPU 21 returns the process to Step S201. If the CPU 21 determines that a user operation to end the management app 231 has been made (Step S207; YES), the CPU 21 ends the emotion icon display process.

In the timeline 44 on the interaction record screen 40 shown in FIG. 10, for each target period of a predetermined length, timeline information 441 (period information) indicating a representative state of the robot 10 in the target period is displayed on the basis of the log DB 233. In this embodiment, a target period of a predetermined length is a time period of one hour from the hour to the next hour. The timeline information 441 is one of first to fourth types described below. The first type is timeline information 441 on a sleep state of the robot 10 in a time period (e.g., timeline information 441a in FIG. 10). The second type is timeline information 441 on a spontaneous action made by the robot 10 in a time period (e.g., timeline information 441b in FIG. 10). The third type is timeline information 441 on an external stimulus received by the robot 10 through a communication with the user in a time period (e.g., timeline information 441c in FIG. 10). The fourth type is timeline information 441 on the emotion of the robot 10 in a time period (e.g., timeline information 441d in FIG. 10). The number of pieces of the timeline information 441 displayed for a certain time period is four at the maximum, but one for each type. Multiple pieces of the timeline information 441 different from one another but corresponding to the same state of the robot 10 are generated in advance and stored in the storage 13. The CPU 21 selects the contents of the timeline information 441 so that the same contents of the timeline information 441 are not displayed for two consecutive time periods. There are some cases where no timeline information 441 is displayed for a certain time period. Examples thereof include a case where no state corresponding to any of the above four types is detected on the basis of logs 133 corresponding to a certain time period, and a case where there is no change from the state in one time period before. Each (piece of) timeline information 441 indicates the state of the robot 10 in the time period of one hour starting from the time displayed inside its frame. For example, the timeline information 441 with "11:00" displayed in the frame indicates the state of the robot 10 in the time period from 11:00 to 12:00. The timeline 44 is updated once per hour.

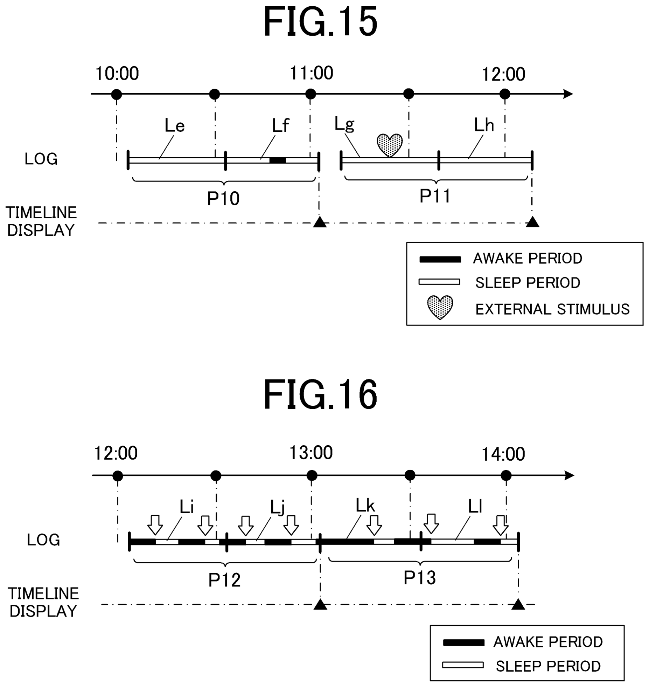

The contents of the timeline information 441 for a certain time period are determined on the basis of, in the log DB 233, logs 133 corresponding to the time period. A log 133 whose recording period crosses the hour is treated as a log 133 corresponding to a time period in which at least half of the recording period falls. For example, the recording period of a log Lf shown in FIG. 15 crosses 11:00, but at least half of the recording period falls in the time period from 10:00 to 11:00. Therefore, the log Lf is treated as a log 133 corresponding to the time period from 10:00 to 11:00. In the example shown in FIG. 15, the contents of the timeline information 441 for the time period from 10:00 to 11:00 is determined on the basis of a log Le and the log Lf, and the contents of the timeline information 441 for the time period from 11:00 to 12:00 is determined on the basis of a log Lg and a log Lh. The timeline information 441 for a certain time period is displayed after the end of the recording periods of logs 133 corresponding to the time period.

In order to display the timeline information 441 on the sleep state, the CPU 21 identifies a sleep period for which the robot 10 has been in the sleep state (sleep mode) on the basis of the sleep information 74 in each log 133 in the log DB 233. If, according to the log DB 233, the length of the sleep period in the recording periods of logs 133 corresponding to a certain time period satisfies a predetermined sleep time condition (predetermined condition), the CPU 21 determines the sleep state as the representative state of the robot 10 in the time period. In this embodiment, the CPU 21 determines that the sleep time condition is satisfied if 50 minutes or more of the recording periods of logs 133 corresponding to a certain time period fall in the sleep period. For example, as to the logs Le and Lf corresponding to the time period from 10:00 to 11:00 shown in FIG. 15, 50 minutes or more of their total recording period P10 fall in the sleep period. Therefore, the CPU 21 determines the sleep state as the representative state in this time period. In FIG. 15, the sleep period is represented by white bars, and the awake period (period in which the robot 10 is awake) is represented by black bars. As to the logs Lg and Lh corresponding to the time period from 11:00 to 12:00, 50 minutes or more (whole in this embodiment) of their total recording period P11 fall in the sleep period. Therefore, the CPU 21 determines the sleep state as the representative state in this time period. When the sleep state is determined as the representative state of the robot 10 in a certain time period, the CPU 21 causes the display 24 to display the timeline information 441 indicating that the robot 10 was in the sleep state during the time period. To be more specific, if the CPU 21 determines that the robot 10 received an external stimulus during the recording periods of the logs 133 corresponding to the time period, the CPU 21 causes the display 24 to display the timeline information 441 including a reaction of the robot 10 during sleep to the external stimulus. For example, in the total recording period P11 of the logs 133 corresponding to the time period from 11:00 to 12:00 shown in FIG. 15, there is a record that the robot 10 received an external stimulus in the sleep state. In this case, for example, as shown in FIG. 10, the CPU 21 causes the display 24 to display the timeline information 441a indicating a during-sleep action as a response/reaction to the external stimulus received by the robot 10 during sleep. The during-sleep action may be the robot 10 dreaming triggered by the external stimulus received by the robot 10 during sleep, for example. Meanwhile, in the time period from 10:00 to 11:00 shown in FIG. 15, there is no record that the robot 10 received an external stimulus in the sleep state. In such a case, the CPU 21 causes the display 24 to display the timeline information 441 indicating that the robot 10 was in the normal sleep state. Instead of the length of the sleep period in the total recording period of logs 133 corresponding to a certain time period, the CPU 21 may determine whether the sleep time condition is satisfied on the basis of the proportion of the sleep period to the total recording period.

Examples of the timeline information 441 on the sleep state include, in addition to the timeline information 411 on the length of the sleep period, timeline information 441 on the number of times the robot 10 has entered the sleep state (sleep mode). If, according to the log DB 233, the number of times the robot 10 entered the sleep state during the total recording period of logs 133 corresponding to a certain time period is equal to or more than a predetermined number of times (four times or more in this embodiment), the CPU 21 determines an unable-to-fall-asleep state as the representative state of the robot 10 in the time period. Then, the CPU 21 causes the display 24 to display the timeline information 441 indicating that the robot 10 was in the unable-to-fall-asleep state during the time period (e.g., "A seemed to doze off"). In the example shown in FIG. 16, during the total recording period P12 of logs Li and Lj corresponding to the time period from 12:00 to 13:00, the robot 10 entered the sleep state four times. Therefore, the CPU 21 determines the unable-to-fall-asleep state as the representative state of the robot 10 in the time period. Meanwhile, during the total recording period P13 of logs Lk and Ll corresponding to the time period from 13:00 to 14:00, the robot 10 entered the sleep state three times, and the sleep period in the total recording period P13 is less than 50 minutes. Therefore, the CPU 21 determines that the representative state of the robot 10 in the time period is neither the unable-to-fall-asleep state nor the sleep state.

In order to display the timeline information 441 on an external stimulus received by the robot 10 through a communication with the user, the CPU 21 refers to the stimulus count information 77 in each log 133 in the log DB 233. If there is a record that the robot 10 received a predetermined external stimulus during the total recording period of logs 133 corresponding to a certain time period, the CPU 21 causes the display 24 to display the timeline information 441 indicating that the robot 10 received the external stimulus during the time period. If there is a record that the robot 10 received multiple types of external stimuli during the total recording period, the CPU 21 selects a certain (type of) external stimulus from the multiple types of external stimuli in accordance with a predetermined priority order for external stimuli, and causes the display 24 to display the timeline information 441 indicating that the robot 10 received the selected certain external stimulus. For example, if there is a record that the robot 10 received, among the multiple types of external stimuli, a certain (type of) external stimulus a predetermined number of times or more, the CPU 21 causes the display 24 to display the timeline information 441 indicating that the robot 10 received the certain external stimulus. Further, the CPU 21 causes the display 24 to display the timeline information 441 indicating, among the multiple types of external stimuli, the (type of) external stimulus received by the robot 10 the largest number of times. Priorities for all (types of) external stimuli that could be detected may be determined in advance, and the CPU 21 may cause the display 24 to display the timeline information 441 indicating, among multiple types of external stimuli received by the robot 10 during the total recording period of logs 133 corresponding to a certain time period, the (type of) external stimulus with the highest priority. The priorities for external stimuli are determined in advance and stored in the action setting data 132, for example. If the multiple types of external stimuli include an external stimulus (positive external stimulus) generated by a predetermined positive communication among multiple types of communications, the CPU 21 may cause the display 24 to display the timeline information 441 indicating that the robot 10 received the positive communication (positive external stimulus). Examples of the positive communication may include, for example, stroking the head of the robot 10, stroking the body of the robot 10, swinging the robot 10 from side to side, and lifting the robot 10. As to the predetermined positive communication, the communication actually made may be counted, and every time the count reaches a predetermined number that is two or more, it may be treated as one time of an external stimulus received through the communication. For example, as to "Stroke", which tends to occur frequently, every time the count of the robot 10 being actually stroked reaches three, it may be determined that the robot 10 received the external stimulus of "Stroke" once. In the example shown in FIG. 10, for the time period from 14:00 to 15:00, the timeline information 441c indicating that the head was stroked is displayed, reflecting the communication of stroking the head having occurred the largest number of times during the time period.

When the emotion of the robot 10 in the total recording period of logs 133 corresponding to a certain time period satisfies a predetermined display condition for displaying the timeline information 441, the CPU 21 causes the display 24 to display the timeline information 441 on the emotion of the robot 10 for the time period. For example, when the display condition for the emotion icon 433 is satisfied as shown in FIG. 13, the CPU 21 determines that the display condition for the timeline information 441 is also satisfied, and causes the display 24 to display the timeline information 441 on the emotion of the robot 10 for the time period. If the CPU 21 determines that multiple times of change occurred in the emotion during a certain time period, the CPU 21 may cause the display 24 to display the timeline information 441 on the emotion after the first change. If the CPU 21 determines that during a certain time period, no change occurred in the emotion of the robot 10, but the robot 10 received a positive external stimulus during a certain time period, and the emotion of the robot 10 was a positive emotion, the CPU 21 determines that the display condition for the timeline information 441 is satisfied and causes the display 24 to display the timeline information 441 on the emotion. In the example shown in FIG. 10, the CPU 21 causes the display 24 to display the timeline information 441d indicating the emotion of "Happy" for the time period from 15:00 to 16:00.

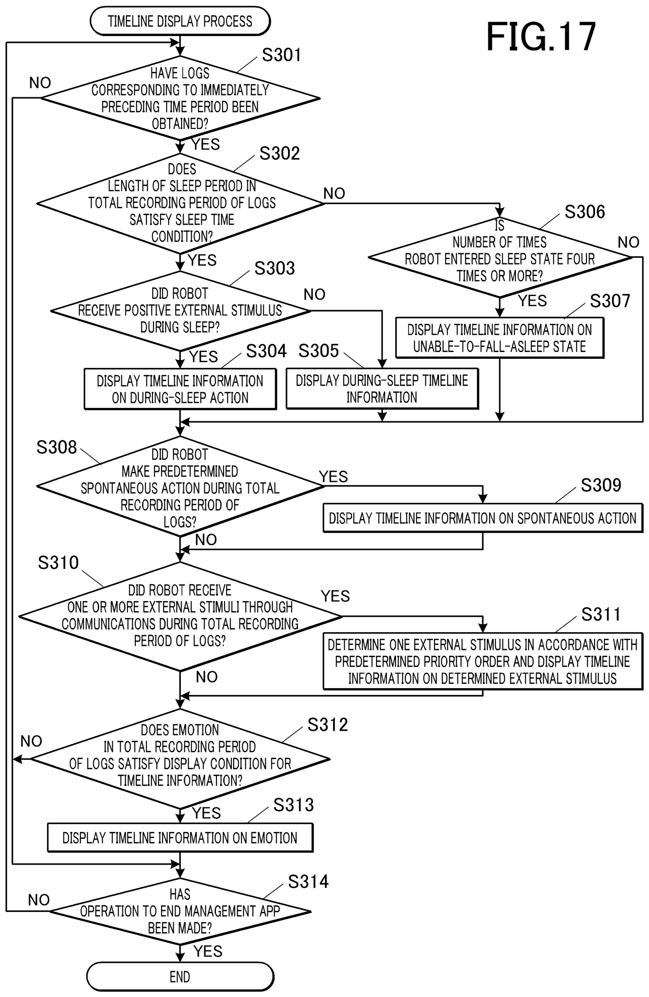

Next, a timeline display process that is performed by the CPU 21 for displaying the timeline 44 will be described with reference to FIG. 17. The timeline display process is started in the case where the interaction record screen 40 is displayed after the management app 231 is started. When the timeline display process is started, the CPU 21 determines whether logs 133 corresponding to the immediately preceding time period have been obtained (Step S301). If the CPU 21 determines that the logs 133 have been obtained (Step S301; YES), the CPU 21 determines whether the length of the sleep period in the total recording period of the logs 133 satisfies the sleep time condition (Step S302). In this embodiment, the CPU 21 determines that the sleep time condition is satisfied when the length of the sleep period in the total recording period of the logs 133 corresponding to the immediately preceding time period is 50 minutes or more. If the CPU 21 determines that the sleep time condition is satisfied (Step S302; YES), the CPU 21 determines whether the robot 10 received a positive external stimulus during sleep (Step S303). If the CPU 21 determines that the robot 10 received a positive external stimulus during sleep (Step S303; YES), the CPU 21 causes the display 24 to display the timeline information 441 on the during-sleep action (Step S304). If the CPU 21 determines that the robot 10 received no positive external stimulus during sleep (Step S303; NO), the CPU 21 causes the display 24 to display the timeline information 441 that is normal during-sleep timeline information 441 (Step S305). If the CPU 21 determines in Step S302 that the sleep time condition is not satisfied (Step S302; NO), the CPU 21 determines whether the number of times the robot 10 entered the sleep state during the total recording period of the logs 133 corresponding to the immediately preceding time period is four times or more (Step S306). If the CPU 21 determines that the number of times the robot 10 entered the sleep state is four times or more (Step S306; YES), the CPU 21 causes the display 24 to display the timeline information 441 on the unable-to-fall-asleep state (Step S307).

After Step S304, Step S305 or Step S307, or if the CPU 21 determines that the number of times the robot 10 entered the sleep state is less than four times (Step S306; NO), the CPU 21 determine whether the robot 10 made a predetermined spontaneous action during the total recording period of the logs 133 corresponding to the immediately preceding time period (Step S308). If the CPU 21 determines that the robot 10 made a predetermined spontaneous action (Step S308; YES), the CPU 21 causes the display 24 to display the timeline information 441 on the spontaneous action (Step S309). After Step S309, or if the CPU 21 determines that the robot 10 made no predetermined spontaneous action (Step S308; NO), the CPU 21 determines whether the robot 10 received one or more external stimuli through communications with the user during the total recording period of the logs 133 corresponding to the immediately preceding time period (Step S310). If the CPU 21 determines that the robot 10 received one or more external stimuli through communications with the user (Step S310; YES), the CPU 21 determines one external stimulus in accordance with a predetermined priority order as described above, and causes the display 24 to display the timeline information 441 on the determined external stimulus (Step S311). After Step S311, or if the CPU 21 determines that the robot 10 received no external stimuli through communications with the user (Step S310; NO), the CPU 21 determines whether the emotion of the robot 10 in the total recording period of the logs 133 corresponding to the immediately preceding time period satisfies the display condition for the timeline information 441 (Step S312). If the CPU 21 determines that the emotion of the robot 10 in the total recording period satisfies the display condition for the timeline information 441 (Step S312; YES), the CPU 21 causes the display 24 to display the timeline information 441 on the emotion (Step S313). After Step S313, or if the determination made in Step S301 or Step S312 is "NO", the CPU 21 determines whether a user operation to end the management app 231 has been made (Step S314). If the CPU 21 determines that no user operation to end the management app 231 has been made (Step S314; NO), the CPU 21 returns the process to Step S301. If the CPU 21 determines that a user operation to end the management app 231 has been made (Step S314; YES), the CPU 21 ends the timeline display process.

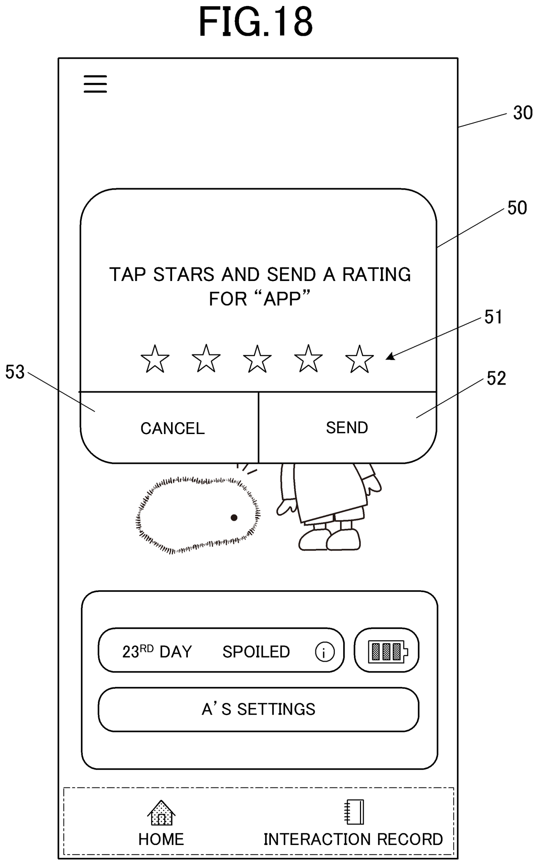

When transition to the home screen 30 is performed first time after a certain condition is satisfied during execution of the management app 231, a rating screen 50 shown in FIG. 18 is displayed on the home screen 30. The rating screen 50 is for the user to input a rating for the management app 231. On the rating screen 50, a text of "Tap stars and send a rating for "App"", five star marks 51 for inputting a rating on a scale of one to five, a send button 52 and a cancel button 53 are displayed. The "App" included in the text is the name of the management app 231 in practice. When the user selects the N^{th} star mark 51 from the left (N is one of 1 to 5) by tapping it or the like, a star mark(s) 51 from the left to the N^{th} star mark 51 is/are colored. Thus, the N on a scale of one to five is input as a rating for the management app 231. When the user selects the send button 52 with a rating input, the CPU 21 transmits information on the input rating to a not-shown app store server. The transmitted information on the rating is reflected in a displayed rating for the management app 231 at an app store provided by the app store server.

The CPU 21 causes the display 24 to display the rating screen 50 when one of first to third conditions is satisfied, which hereinafter will be described. The first condition is satisfied when the user has opened the setting screen of the robot 10 a predetermined number of times or more (six times or more in this embodiment) in all. As mentioned above, the setting screen is displayed by the user selecting the setting button 36 on the home screen 30 shown in FIG. 8. The user having changed the settings of the robot 10 on the setting screen can be regarded as the user having been able to customize the robot 10 to fit his/her preferences and environment. Therefore, by displaying the rating screen 50 at the timing at which the first condition is satisfied, it can be expected that the user will input a high rating, being satisfied with the robot 10 and the management app 231 to some degree.

The second condition and the third condition are each satisfied when it is determined on the basis of the log DB 233 that the history of the state of the robot 10 satisfies a predetermined condition. The second condition is satisfied when the number of times the emotion of the robot 10 has changed to a predetermined emotion satisfies a certain condition. For example, the second condition may be satisfied when the number of days on which the emotion of the robot 10 changed to a predetermined emotion a predetermined number of times or more is a predetermined number of days or more in all. This change in the emotion of the robot 10 to a predetermined emotion may be the emotion change that satisfies the display condition for the emotion icon 433 described above. The second condition may be satisfied, for example, when the number of days on which the emotion icon 433 was displayed twice or more is three days or more in all. The lower limit value of the number of times the emotion icon 433 was displayed in one day (twice in the above example) and the lower limit value of the number of days on which the emotion icon 433 was displayed in all (three days in the above example) may be changed as appropriate.

The third condition is satisfied when the history of the emotion of the robot 10 and the level thereof satisfies a certain condition according to the log DB 233. For example, the third condition may be satisfied when the number of times a predetermined emotion(s) has reached a predetermined reference (level) or higher is equal to or more than a reference number of times. The third condition may be satisfied, for example, when the number of times each of two or more of the positive emotions ("Excited", "Happy", "Secure" and "Calm") has reached the highest Level 10 is twice or more. When a certain emotion reaches Level 10, the state image 31 corresponding to Level 10 of the emotion may be displayed on the home screen 30. The lower limit value of the level of the emotions (Level 10 in the above example) and the lower limit value of the number of times the emotions have reached the level (twice in the above example) to satisfy the third condition may be changed as appropriate.

When one of the first to third conditions is satisfied and the rating screen 50 is displayed, the count pertaining to the satisfied condition (the number of times the setting screen has been displayed in the case of the first condition, the number of days on which the emotion icon 433 was displayed in the case of the second condition, or the number of times the positive emotions have reached the highest Level 10 in the case of the third condition) is reset. If two or more robots 10 are associated with the smartphone 20, whether the first to third conditions are satisfied may be determined on the basis of the total count of the above of the two or more robots 10. Further, elapse of a predetermined period (e.g., one week) from the day on which the management app 231 installed on the smartphone 20 was started first time may be used as a condition for displaying the rating screen 50. Even if the CPU 21 causes the display 24 to display the rating screen 50 in accordance with the management app 231, the operating system (OS) of the smartphone 20 may put restrictions on the actual display of the rating screen 50, for example, on the basis of the number of times the rating screen 50 has been displayed in one year or the display frequency of the rating screen 50 in the most recent predetermined period (e.g., one month). In this case, the CPU 21 causing the display 24 to display the rating screen 50 in accordance with the management app 231 includes the CPU 21 outputting a request to the OS to display the rating screen 50.

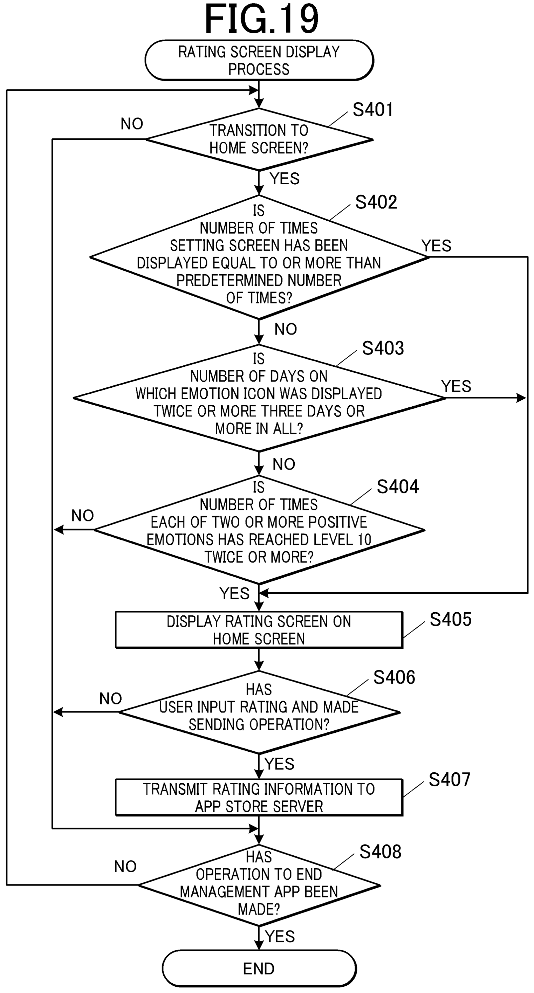

Next, a rating screen display process that is performed by the CPU 21 for displaying the rating screen 50 will be described with reference to FIG. 19. The rating screen display process is started in the case where the management app 231 is started. When the rating screen display process is started, the CPU 21 determines whether the display 24 has transitioned to the home screen 30 from another screen (Step S401). If the CPU 21 determines that the display 24 has transitioned to the home screen 30 (Step S401; YES), the CPU 21 determines whether the number of times the setting screen has been displayed is equal to or more than a predetermined number of times (six times or more in this embodiment) (Step S402). If the CPU 21 determines that the number of times the setting screen has been displayed is equal to or more than the predetermined number of times (Step S402; YES), the CPU 21 causes the display 24 to display the rating screen 50 on the home screen 30 (Step S405). If the CPU 21 determines that the number of times the setting screen has been displayed is less than the predetermined number of times (Step S402; NO), the CPU 21 determines whether the number of days on which the emotion icon 433 was displayed twice or more is three days or more in all (Step S403). If the CPU 21 determines that the number of days on which the emotion icon 433 was displayed twice or more is three days or more in all (Step S403; YES), the CPU 21 causes the display 24 to display the rating screen 50 on the home screen 30 (Step S405). If the CPU 21 determines that the number of days on which the emotion icon 433 was displayed twice or more is less than three days in all (Step S403; NO), the CPU 21 determines whether the number of times each of two or more positive emotions has reached Level 10 is twice or more (Step S404). If the CPU 21 determines that the number of times each of two or more positive emotions has reached Level 10 is twice or more (Step S404; YES), the CPU 21 causes the display 24 to display the rating screen 50 on the home screen 30 (Step S405). After the display 24 displays the rating screen 50 in Step S405, the CPU 21 determines whether the user has input a rating using the star marks 51 and made a sending operation (operation of selecting the send button 52) (Step S406). If the CPU 21 determines that the user has input a rating and made a sending operation (Step S406; YES), the CPU 21 transmits information on the input rating to the app store server (Step S407). After Step S407, or if the determination made in any of Steps S401, S404 and S406 is "NO", the CPU 21 determines whether a user operation to end the management app 231 has been made (Step S408). If the CPU 21 determines that no user operation to end the management app 231 has been made (Step S408; NO), the CPU 21 returns the process to Step S401. If the CPU 21 determines that a user operation to end the management app 231 has been made (Step S408; YES), the CPU 21 ends the rating screen display process. The order of Steps S402 to S404 may be changed.

As described above, on the management app 231 (or in the display control method) of this embodiment, the CPU 21 identifies, based on the log DB 233 on the history of the state of the robot 10, a change timing at which the state of the robot 10 changed from a certain state to a predetermined state. The CPU 21 causes the display 24 to display the coordinate axis 431 that represents passage of time and, as an indicator, the emotion icon 433 that is disposed at a position corresponding to the change timing on the coordinate axis 431 and indicates that the state of the robot 10 changed to the predetermined state.

The management app 233 of this embodiment makes it possible to grasp, with an indicator(s), the change in the state of the robot 10 easily, the change being hardly apparent in the appearance of the robot 10, and the timing at which the change occurred, and accordingly makes it possible to grasp the history of the state of the robot 10 easily.

Further, the log DB 233 includes the history of the emotion parameter 75 representing the pseudo-emotion of the robot 10 as the state of the robot 10. The CPU 21 identifies, based on the log DB 233, the change timing at which the pseudo-emotion of the robot 10 changed from a certain emotion to a predetermined emotion. The CPU 21 causes the display 24 to display the coordinate axis 431 and the emotion icon 433 indicating that the pseudo-emotion of the robot 10 changed to the predetermined emotion. This makes it possible to grasp the change in the emotion of the robot 10 easily, the change being hardly apparent in the appearance of the robot 10, and the timing at which the change occurred.

Further, the emotion parameter 75 indicates coordinates on the coordinate plane of the emotion map divided into the regions R1 to R9 corresponding to emotions different from one another, the emotions being included in the pseudo-emotion. In response to the emotion parameter 75 having changed from coordinates in, among the regions R1 to R9, a region corresponding to the certain emotion to coordinates in, among the regions R1 to R9, a region corresponding to the predetermined emotion, the CPU 21 causes the display 24 to display the emotion icon 433 indicating that the pseudo-emotion of the robot 10 changed to the predetermined emotion. This makes it possible to identify the emotion of the robot 10 and the change in the emotion by a simple process of identifying coordinates, which are indicated by the emotion parameter 75, on the emotion map.

Further, the emotion parameter 75 represents one of emotions different from one other, the emotions being included in the pseudo-emotion, and the predetermined emotion is one of at least one positive emotion, which includes "Excited", "Happy", "Secure" and "Calm", included in the emotions. This allows the user to recognize that a positive change occurred in the emotion of the robot 10, and accordingly allows the user to be attached to the robot 10 easily.

Further, the emotion parameter 75 indicates the level (degree) of the pseudo-emotion. In response to the level of the predetermined emotion at the change timing being equal to or higher (greater) than a predetermined reference, the CPU 21 causes the display 24 to display the emotion icon 433. This allows the user to recognize that the robot 10 has become emotionally rich, and accordingly allows the user to be attached to the robot 10 easily.

Further, the log DB 233 includes a log 133 as the first history information on the state of the robot 10 in the first period and a log 133 as the second history information on the state of the robot 10 in the second period after the first period. In response to the state of the robot 10 indicated by the first history information being the certain state and the state of the robot 10 indicated by the second history information being the predetermined state, the CPU 21 determines the start timing of the second period as the change timing. This makes it possible to identify the change in the emotion of the robot 10 and the change timing by a simple process of comparing emotions in two logs 133.

Further, in response to the interval from the end of the first period to the start of the second period being within a predetermined time, the CPU 21 determines the start timing of the second period as the change timing. This makes it possible to display the emotion icon 433 only when the change timing of the emotion can be identified with a certain degree of accuracy.

Further, the robot management system 1 of this embodiment includes the server 60 and the display controller 200 including the CPU 21 that performs the above-described processes. Further, the robot management system 1 of this embodiment includes the robot 10 and the display controller 200 including the CPU 21 that performs the above-described processes. Each of these makes it possible to grasp, with an indicator(s), the change in the state of the robot 10 easily, the change being hardly apparent in the appearance of the robot 10, and the timing at which the change occurred.

The present disclosure is not limited to the above embodiment, but can be modified in a variety of aspects. For example, although in the above embodiment, the smartphone 20 displays the home screen 30 and the interaction record screen 40 by performing various processes in accordance with the management app 231, this is no limitation. For example, a server provided externally to the smartphone 20, such as the server 60 shown in FIG. 1, may control the display 24 of the smartphone 20 by transmitting, to the smartphone 20, data for the display 24 to display the home screen 30 and/or the interaction record screen 40. In this case, a computer of the server performs an information processing method of generating data for the CPU 21 as another computer to perform processes described below. The data that is generated for the CPU 21 is data for the CPU 21 (another computer) to "identify, based on the log DB 233 on the history of the state of the robot 10, a change timing at which the state of the robot 10 changed from a certain state to a predetermined state, and cause the display 24 to display the coordinate axis 431 that represents passage of time and, as an indicator, the emotion icon 433 that is disposed at a position corresponding to the change timing on the coordinate axis 431 and indicates that the state of the robot 10 changed to the predetermined state". Of these, the computer of the server may "identify, based on the log DB 233 on the history of the state of the robot 10, a change timing at which the state of the robot 10 changed from a certain state to a predetermined state". In this case, the data that is generated for the CPU 21 is data for the CPU 21 (another computer) to "cause the display 24 to display the coordinate axis 431 that represents passage of time and, as an indicator, the emotion icon 433 that is disposed at a position corresponding to the change timing on the coordinate axis 431 and indicates that the state of the robot 10 changed to the predetermined state". The data that is generated for the CPU 21 may include data specifying the contents and the structure of the interaction record screen 40, such as image data and HyperText Markup Language (HTML) data. Further, the data that is generated for the CPU 21 may include control information for controlling the operation of the display 24. Still further, the data that is generated for the CPU 21 may be a program for the display 24 to display the interaction record screen 40 thereon. At least part of the processes that are performed by the CPU 21 in the above embodiment may be performed by the CPU 11 of the robot 10. In this case, the CPU 11 may correspond to the one or more processers, which are mentioned above, or the CPU 21 of the display controller 200 and the CPU 11 of the robot 10 may constitute the one or more processers. Further, at least part of the processes that are performed by the CPU 21 in the above embodiment may be performed by the computer of the server. In this case, the computer of the server may correspond to the one or more processers, or the CPU 21 of the display controller 200 and the computer of the server may constitute the one or more processers.

Further, although FIG. 13, FIG. 15 and FIG. 16 show the cases where the target period of the timeline information 441 (time period from the hour to the next hour) and the recording period(s) of a log(s) 133 do not match, this is no limitation. The recording period(s) of a log(s) 133 may match with the target period of the timeline information 441.

Further, the contents of each log 133 are not limited to those shown in FIG. 4, but may include other elements indicating the state of the robot 10. For example, as elements of the state of the robot 10, elements such as the degree of fatigue, the degree of sleepiness, a physical condition and so forth may be included.

Further, although in the above embodiment, the home screen 30 and the interaction record screen 40 are displayed by the display 24 of the smartphone 20, this is no limitation. For example, if the robot 10 has a display, the home screen 30 and the interaction record screen 40 may be displayed by this display. In this case, the control to display the home screen 30 and the interaction record screen 40 may be performed by the CPU 11 of the robot 10, or may be performed remotely by a processer of an external device, such as the CPU 21 of the smartphone 20.

Further, the configuration of the robot 10 is not limited to the one shown in FIG. 1 to FIG. 3. For example, the robot 10 may be a robot made to simulate an existing living creature, such as a human, an animal, a bird or a fish, a robot made to simulate a no-more-existing living creature, such as a dinosaur, or a robot made to simulate an imaginary living creature.

Further, although in the above embodiment, the robot 10 is the object, the object is not limited thereto. The object may be any object as far as it can be managed with the management app 231. For example, the object may be an object whose parameter that indicates its state changes. Further, the object may be an avatar that acts on behalf of the user in a virtual space, such as a metaverse.

Further, although in the above embodiment, the flash memories of the storages 13 and 23 are each used as the computer-readable medium storing the programs of the present disclosure, the computer-readable medium is not limited thereto. As the computer-readable medium, an information storage/recording medium, such as a hard disk drive (HDD), a solid state drive (SSD) or a CD-ROM, is also applicable. Further, a carrier wave is applicable as a medium that provides data of the programs of the present disclosure via a communication line. It goes without saying that the detailed configuration and detailed operation of each component of the robot 10 and the smartphone 20 in the above embodiment can be changed as appropriate without departing from the scope of the present disclosure. Although one or more embodiments of the present disclosure have been described above, the scope of the present disclosure is not limited to the embodiments above, but includes the scope of claims below and the scope of their equivalents.

## Claims

1. A program (231) causing a computer (21) to:
based on history information (233) on a history of a state of an object (10), identify a change timing at which the state of the object (10) changed from a certain state to a predetermined state; and
cause a display (24) to display a coordinate axis (431) that represents passage of time and an indicator (433) that is disposed at a position corresponding to the change timing on the coordinate axis (431) and indicates that the state of the object (10) changed to the predetermined state.

2. The program (231) according to claim 1,
wherein the history information (233) includes a history of an emotion parameter (75) representing a pseudo-emotion of the object (10) as the state of the object (10), and
wherein the program (231) causes the computer (21) to,
based on the history information (233), identify the change timing at which the pseudo-emotion of the object (10) changed from a certain emotion to a predetermined emotion, and
cause the display (24) to display the coordinate axis (431) and the indicator (433) indicating that the pseudo-emotion of the object (10) changed to the predetermined emotion.

3. The program (231) according to claim 2,
wherein the emotion parameter (75) indicates coordinates on a coordinate plane divided into regions (R1-R9) corresponding to emotions different from one another, the emotions being included in the pseudo-emotion, and
wherein the program (231) causes the computer (21) to, in response to the emotion parameter (75) having changed from coordinates in, among the regions (R1-R9), a region corresponding to the certain emotion to coordinates in, among the regions (R1-R9), a region corresponding to the predetermined emotion, cause the display (24) to display the indicator (433) indicating that the pseudo-emotion of the object (10) changed to the predetermined emotion.

4. The program (231) according to claim 2,
wherein the emotion parameter (75) represents one of emotions different from one other, the emotions being included in the pseudo-emotion, and
wherein the predetermined emotion is one of at least one predetermined positive emotion included in the emotions.

5. The program (231) according to claim 2,
wherein the emotion parameter (75) indicates a degree of the pseudo-emotion, and
wherein the program (231) causes the computer (21) to, in response to a degree of the predetermined emotion at the change timing being equal to or greater than a predetermined reference, cause the display (24) to display the indicator (433).

6. The program (231) according to claim 1,
wherein the history information (233) includes first history information (133) on the state of the object (10) in a first period and second history information (133) on the state of the object (10) in a second period after the first period, and
wherein the program (231) causes the computer (21) to, in response to the state of the object (10) indicated by the first history information (133) being the certain state and the state of the object (10) indicated by the second history information (133) being the predetermined state, determine a start timing of the second period as the change timing.

7. The program (231) according to claim 6, wherein the program (231) causes the computer (21) to, in response to an interval from an end of the first period to a start of the second period being within a predetermined time, determine the start timing of the second period as the change timing.

8. A display control method that is performed by a computer (21), the display control method comprising:
based on history information (233) on a history of a state of an object (10), identifying a change timing at which the state of the object (10) changed from a certain state to a predetermined state (S201-S206); and
causing a display (24) to display a coordinate axis (431) that represents passage of time and an indicator (433) that is disposed at a position corresponding to the change timing on the coordinate axis (431) and indicates that the state of the object (10) changed to the predetermined state (S206).

9. An information processing method that is performed by a computer (11), the information processing method comprising generating data for another computer (21) to:
based on history information (233) on a history of a state of an object (10), identify a change timing at which the state of the object (10) changed from a certain state to a predetermined state; and
cause a display (24) to display a coordinate axis (431) that represents passage of time and an indicator (433) that is disposed at a position corresponding to the change timing on the coordinate axis (431) and indicates that the state of the object (10) changed to the predetermined state.

10. A display system (1) comprising:
an object (10); and
a display controller (200) including a processor (21) that
based on history information (233) on a history of a state of an object (10), identifies a change timing at which the state of the object (10) changed from a certain state to a predetermined state, and
causes a display (24) to display a coordinate axis (431) that represents passage of time and an indicator (433) that is disposed at a position corresponding to the change timing on the coordinate axis (431) and indicates that the state of the object (10) changed to the predetermined state.
